# EUROPÄISCHE PATENTANMELDUNG

(11) **EP 4 265 086 A1**
(43) Veröffentlichungstag der Anmeldung: **25.10.2023**
(21) Anmeldenummer: 23163641.6
(22) Anmeldetag: 23.03.2023
(51) Int. Cl.: A01B 39/18, A01B 63/00, A01B 63/02, A01B 63/24, A01M 21/02

(54) **BODENBEARBEITUNGSGERÄT**

(30) Priorität: 06.04.2022 DE 102022108246
(71) Anmelder: Rath jun., Engelbert, 93102 Pfatter (DE)
(72) Erfinder: Rath jun., Engelbert, 93102 Pfatter (DE)
(74) Vertreter: Glück Kritzenberger Patentanwälte PartGmbB

(57) **Zusammenfassung**

Beschrieben wird ein Bodenbearbeitungsgerät für die mechanische Unkrautbekämpfung zwischen Reihen von Kulturpflanzen, aufweisend einen an einer Zugmaschine befestigbaren Rahmen zum Bewegen entlang einer Fahrtrichtung F, zumindest eine, an dem Rahmen befestigte Bearbeitungseinheit 2, wobei die zumindest eine Bearbeitungseinheit 2 ein aus einem elastischen Material bestehendes rahmenartiges Element 4 aufweist. Das Bodenbearbeitungsgerät umfasst außerdem ein erstes, beweglich ausgebildetes Stellmittel 18.L, wobei das erste Stellmittel 18.L über zumindest ein erstes Verbindungselement 7.L.1 mit dem rahmenartigen Element 4 verbunden ist, und ein zweites, beweglich ausgebildetes Stellmittel 18.R, wobei das zweite Stellmittel 18.R über zumindest ein zweites Verbindungselement 7.R.1 mit dem rahmenartigen Element 4 verbunden ist. Daneben ist zumindest eine Verstelleinheit 19 zum Ausführen einer Bewegung des ersten 18.L und des zweiten Stellmittels 18.R vorgesehen, wobei durch die Bewegung des ersten 18.L und des zweiten Stellmittels 18.R das rahmenartige Element 4 derart elastisch deformierbar ist, dass sich die Ausdehnung des rahmenartigen Elements 4 quer zur Fahrtrichtung F verändert.

## Beschreibung

### Technisches Gebiet

Die vorliegende Erfindung betrifft ein Bodenbearbeitungsgerät für die mechanische Unkrautbekämpfung.

### Stand der Technik

Bodenbearbeitungsgeräte für die mechanische Unkrautbekämpfung zwischen Reihen von Kulturpflanzen sind in vielfältigen Varianten bekannt. Zentraler Bestandteil solcher Bodenbearbeitungsgeräte sind Hackvorrichtungen und insbesondere Hackschare, die dazu dienen, die Wurzeln von Unkraut und ähnlichem unerwünschten Bewuchs in der Erde zu durchtrennen bzw. zu lockern. Dazu wird die Hackschar in geringer Tiefe durch den Boden gezogen, wobei üblicherweise ein Tiefenführungsrad vorgesehen ist, mit dessen Hilfe die Hackschare den Bodenkonturen folgen können.

Dabei kann es vorkommen, dass in größeren Erdbrocken noch so viele Wurzeln eingebettet bleiben, dass das Unkraut weiterwächst, insbesondere dann, wenn bei feuchtem Wetter kein Austrocknen der Erdbrocken erfolgt. Aus diesem Grund werden Hackschare häufig mit Striegelzinken kombiniert, welche zum einen dazu dienen, die von den Hackschare abgelösten Erdschollen und -brocken zu zerkleinern, und zum anderen dazu, das Unkraut an die Erdoberfläche zu ziehen. In beiden Fällen werden die Wurzeln der Unkräuter freigelegt, trocknen aus und können nicht mehr anwachsen. Solche Bodenbearbeitungsgeräte sind beispielsweise aus der EP 0 426 960 B1, der DE 35 21 785 C2 oder der US 5,168,936 A bekannt.

Ziel jeder Unkrautbekämpfung und auch jeder mechanischen Unkrautbekämpfung ist die möglichst vollständige Entfernung des Unkrautes zwischen den Reihen von Kulturpflanzen. Von besonderer Wichtigkeit ist dabei, auch Unkraut zu entfernen, das relativ nah an den Kulturpflanzen wächst. Dabei darf die Unkrautbekämpfung aber nicht dazu führen, dass die Kulturpflanzen in relevantem Ausmaß geschädigt werden. Dadurch ergibt sich das Problem, dass die oben beschriebenen Hackschare und Striegelzinken so geführt werden sollten, dass auch nahe an den Kulturpflanzen wachsendes Unkraut bekämpft wird, wobei aber möglichst keine Schädigung der Kulturpflanzen selbst erfolgt. Bei Einsatz der Bodenbearbeitungsgeräte auf landwirtschaftlichen Flächen, insbesondere auf Äckern, wäre es daher bei der mechanischen Unkrautbekämpfung von Vorteil, wenn die Linie, entlang derer Hackschare und Striegelzinken geführt werden, an die realen Bedingungen des jeweiligen Anbaugebiets angepasst werden könnten.

In diesem Zusammenhang offenbart die FR 2 359 570 A1 ein Bodenbearbeitungsgerät mit einem Grundgestell und mehreren, in dem Grundgestell angeordneten und parallelogrammartig ausgebildeten Hilfsrahmen. An jedem der Hilfsrahmen sind dabei zumindest zwei Hackschare befestigt, deren Abstand zueinander quer zur Fahrtrichtung verstellbar ist, und zwar jeweils mittels eines Betätigungshebels, welcher den entsprechenden Hilfsrahmen staucht oder streckt.

Aus der DE 817 828 B ist eine Vorrichtung zur Halterung von Bodenbearbeitungsgeräten wie z.B. Gänsefüße, Grubberzinken usw. bekannt, wobei die einzelnen Werkzeughalter der Bodenbearbeitungsgeräte verstellbar gelagert sind. Weiterhin ist ein einziges Stellmittel vorgesehen, durch dessen Betätigung die Abstände der Werkzeughalter gleichzeitig und gleichmäßig verändert werden können. Zur Veränderung des Abstandes der Werkzeughalter dient eine "Nürnberger-Schere", deren Glieder mittels einer Spindel mit Rechts- und Linksgewinde aufeinander zubewegt bzw. auseinander bewegt werden können.

Der Einsatz dieser Bodenbearbeitungsgeräte erweist sich aber als nicht praktikabel. Der wesentliche Nachteil der beschriebenen Lösungsansätze besteht darin, dass der Bodenbearbeitungsvorgang zum Verstellen des Abstandes zwischen den Hackschare unterbrochen werden muss. Es muss also bei jeder notwendigen Anpassung des Abstandes zwischen den Hackschare die Zugmaschine gestoppt und das Verstellen des Abstandes händisch vorgenommen werden. Dadurch ergibt sich ein extrem zeitraubender Aufwand, der in der Praxis nicht in ökonomisch vertretbarer Weise durchgeführt werden kann.

Es besteht daher ein Bedarf an Bodenbearbeitungsgeräten für die mechanische Unkrautbekämpfung zwischen Reihen von Kulturpflanzen, bei denen die Linie, entlang derer Hackschare und Striegelzinken geführt werden, in einfacher Weise und ohne großen zeitlichen Aufwand an die realen Bedingungen des jeweiligen Anbaugebiets angepasst werden könnten.

### Darstellung der Erfindung

Der Erfindung, wie sie in den Ansprüchen gekennzeichnet ist, liegt die Aufgabe zu Grunde, ein Bodenbearbeitungsgerät für die mechanische Unkrautbekämpfung zwischen Reihen von Kulturpflanzen zur Verfügung zu stellen, bei dem die Linie, entlang derer Hackschare und Striegelzinken geführt werden, in einfacher Weise ohne großen zeitlichen Aufwand verändert werden kann.

Diese Aufgabe wird erfindungsgemäß durch das Bodenbearbeitungsgerät gemäß Anspruch 1 gelöst. Weitere vorteilhafte Details, Aspekte und Ausgestaltungen der vorliegenden Erfindung ergeben sich aus den abhängigen Ansprüchen, der Beschreibung, den Beispielen und den Zeichnungen.

Die vorliegende Erfindung stellt ein Bodenbearbeitungsgerät für die mechanische Unkrautbekämpfung zwischen Reihen von Kulturpflanzen zur Verfügung. Das Bodenbearbeitungsgerät weist einen an einer Zugmaschine befestigbaren Rahmen zum Bewegen entlang einer Fahrtrichtung auf. Das Bodenbearbeitungsgerät weist zudem zumindest eine, an dem Rahmen befestigte Bearbeitungseinheit auf, wobei die zumindest eine Bearbeitungseinheit ein aus einem elastischen Material bestehendes rahmenartiges Element aufweist. Das Bodenbearbeitungsgerät umfasst außerdem ein erstes, beweglich ausgebildetes Stellmittel, wobei das erste Stellmittel über zumindest ein erstes Verbindungselement mit dem rahmenartigen Element verbunden ist, und ein zweites, beweglich ausgebildetes Stellmittel, wobei das zweite Stellmittel über zumindest ein zweites Verbindungselement mit dem rahmenartigen Element verbunden ist. Daneben ist zumindest eine Verstelleinheit zum Ausführen einer Bewegung des ersten und des zweiten Stellmittels vorgesehen, wobei durch die Bewegung des ersten und des zweiten Stellmittels das rahmenartige Element derart elastisch deformierbar ist, dass sich die Ausdehnung des rahmenartigen Elements quer zur Fahrtrichtung F verändert.

Der Kern der vorliegenden Erfindung liegt in der Idee, ein aus einem elastischen Material bestehendes rahmenartiges Element, welches aufgrund der elastischen Eigenschaften des elastischen Materials in seiner Form veränderlich ist, mit einer Vorrichtung zu kombinieren, welche durch eine Bewegung von Stellmitteln eine Anpassung der Form des rahmenartigen Elements bewirkt. Wie nachfolgend noch näher beschrieben, wird dadurch die Möglichkeit geschaffen, an dem rahmenartigen Element angeordnete Bearbeitungswerkzeuge, wie beispielsweise Hackschare oder Striegelzinken, im weitesten Sinne zu bewegen, insbesondere aber den Abstand zwischen mehreren solcher Bearbeitungswerkzeuge zu verändern und damit an die realen Begebenheiten eines bestimmten Ackers anzupassen. Insbesondere kann dadurch die Linie, entlang derer beispielsweise Hackschare und Striegelzinken geführt werden, in einfacher Weise ohne großen zeitlichen Aufwand verändert werden.

Entscheidend für die Funktionsfähigkeit des aus einem elastischen Material bestehenden rahmenartigen Elements sind die elastischen Eigenschaften des Materials, aus dem das rahmenartige Element besteht bzw. zum überwiegenden Teil besteht. Unter Elastizität wird allgemein und auch im Rahmen des vorliegenden Textes die Eigenschaft eines Körpers oder Werkstoffes verstanden, unter Krafteinwirkung seine Form zu verändern und bei Wegfall der einwirkenden Kraft in die Ursprungsform zurückzukehren.

Bei einer Bewegung der erfindungsgemäß vorgesehenen, mit dem rahmenartigen Element verbundenen Stellmittel wird diese Bewegung in eine Veränderung der Form des rahmenartigen Elements umgesetzt. Werden die Stellmittel nachfolgend in ihre ursprüngliche Position zurückbewegt, so nimmt auch das rahmenartige Element aufgrund seiner elastischen Eigenschaften wieder seine ursprüngliche Form und Position ein. Da das rahmenartige Element erfindungsgemäß durch die Bewegung des ersten und des zweiten Stellmittels derart elastisch deformierbar ist, dass sich die Ausdehnung des rahmenartigen Elements quer zur Fahrtrichtung verändert, kann auf diese Weise eine Veränderung des Abstandes zwischen an dem rahmenartigen Element angeordneten Bearbeitungswerkzeugen bewirkt werden, welche aufgrund der elastischen Eigenschaften des rahmenartigen Elements reversibel ausgebildet ist.

Durch die über jeweils zumindest ein Verbindungselement mit dem rahmenartigen Element verbundenen Stellmittel wird also erreicht, dass eine Bewegung der Stellmittel in eine Bewegung des rahmenartigen Elements umgesetzt wird. Dabei wird die Bewegung der Stellmittel über die Verbindungsmittel auf das rahmenartige Element übertragen, dessen elastische Eigenschaften eine Anpassung der Breite des rahmenartigen Elements quer zur Fahrtrichtung ermöglichen.

Die Bewegung der Stellmittel kann im allgemeinsten Fall durch ein den Stellmitteln zugeordnetes Antriebsmittel bewirkt werden. Bei dem Antriebsmittel kann es sich beispielsweise um einen Hydraulikzylinder handeln, welcher bevorzugt mit einem Wegmesssytem ausgestattet ist. Es kann aber auch jedem Stellmittel ein separates Antriebsmittel zugeordnet sein.

Als das erfindungsgemäß vorgesehene elastische Material des rahmenartigen Elements kann jede Art von Material mit elastischen Eigenschaften eingesetzt werden. Bekanntermaßen weist zwar jedes Material grundsätzlich in einem gewissen Umfang elastische Eigenschaften auf, allerdings wird im Rahmen des vorliegenden Textes auf Materialien Bezug genommen, deren elastische Eigenschaften mit einem in der Praxis vertretbaren Aufwand eingesetzt werden können. Dem Fachmann ist selbstverständlich klar und bewusst, dass die elastischen Eigenschaften eines makroskopischen Körpers nicht ausschließlich von den elastischen Eigenschaften des Materials abhängen, aus dem dieser Körper besteht, sondern auch von der Dimensionierung des Körpers. Ist also im Rahmen des vorliegenden Textes von einem z.B. aus Federstahl bestehenden rahmenartigen Element die Rede, so ist dem Fachmann klar, dass dieses rahmenartige Element bei der Bodenbearbeitung im landwirtschaftlichen Bereich eingesetzt wird. Der Fachmann wird folgern, dass es sich bei dem rahmenartigen Element weder um meterdicke Stahlblöcke handelt, noch um Metallfolien mit einer Dicke im Mikrometerbereich. Der Fachmann wird vielmehr zwanglos die Dimensionierung des rahmenartigen Elements so wählen, dass das Element einerseits die gewünschten elastischen Eigenschaften aufweist, andererseits aber stabil genug ausgebildet ist, um den Beanspruchungen bei der Bearbeitung landwirtschaftlicher Flächen Stand zu halten.

Bevorzugt handelt es sich bei dem elastischen Material um ein Elastomer, einen Thermoplast, einen Gummi, insbesondere Hartgummi, oder um Stahl, insbesondere Federstahl. Bevorzugt handelt es sich bei dem Stahl um einen Edelstahl, insbesondere bevorzugt um einen Chrom-Nickel-Edelstahl. Besonders bevorzugt handelt es sich um Edelstahl 1.4310. Besonders gute Eigenschaften weist auch Hardox^{®}-Stahl auf.

Das rahmenartige Element ist bevorzugt einstückig oder aus mehreren, relativ zueinander unbeweglich und fest miteinander verbundenen Teilelementen aufgebaut. Eine einstückige Ausführung des rahmenartigen Elements bedeutet, dass das gesamte Element aus dem elastischen Material besteht. Ist das rahmenartige Element aus mehreren Teilelementen aufgebaut, so bestehen diese einzelnen Teilelemente aus dem elastischen Material. Die einzelnen elastischen Teilelemente sind relativ zueinander unbeweglich und fest miteinander verbunden. Zur Verbindung der einzelnen Teilelemente kann jede Art von Fixierelement, also Klammern, Schrauben, Nieten, usw., eingesetzt werden. Diese Fixierelemente sind in der Regel nicht aus einem elastischen Material gebildet, sondern aus den für die jeweilige Art von Fixierelement üblichen metallischen Materialien. In diesem Fall besteht das rahmenartige Element strenggenommen nicht aus dem elastischen Material, sondern ist überwiegend aus diesem Material aufgebaut. Dem Fachmann ist aber klar, dass die im Rahmen der vorliegenden Erfindung gewünschten und erforderlichen elastischen Eigenschaften des rahmenartigen Elements durch die aus nichtelastischem Material bestehenden Fixierelemente nicht beeinflusst werden. Es ist also durchaus angezeigt auch im Falle von durch Fixierelemente aneinander befestigten Teilelementen davon zu sprechen, dass das rahmenartige Element aus einem elastischen Material besteht.

Wie nachfolgend noch näher erläutert, kann das rahmenartige Element unterschiedlichste Formen aufweisen. Grundsätzlich möglich sind eine offene und eine geschlossene Form des rahmenartigen Elements. Im Falle einer offenen Form weist das rahmenartige Element eine C-artige oder U-artige oder irgendwie anders ausgeprägte offene Form mit zwei Enden auf. Im Falle einer geschlossenen Form ist das rahmenartige Element durchgängig ausgebildet. Es weist also eine in sich geschlossene Form, beispielsweise ein Oval, einen Kreis, ein Rechteck, eine Raute oder irgendeine anders ausgeprägte geschlossene Form ohne Ende auf.

Gemäß einer besonders bevorzugten Ausführungsform der vorliegenden Erfindung verläuft das rahmenartige Element in einer Ebene. Wie bereits erläutert wird das rahmenartige Element durch die Bewegung des ersten und des zweiten Stellmittels derart elastisch deformiert, dass sich die Ausdehnung des rahmenartigen Elements quer zur Fahrtrichtung verändert. Auf diese Weise kann eine Veränderung des Abstandes zwischen den an dem rahmenartigen Element angeordneten Bearbeitungswerkzeugen bewirkt werden. Für den Fachmann ist es selbstverständlich, dass diese Veränderung des Abstandes zwischen den Bearbeitungswerkzeugen in einer horizontalen Richtung erfolgen soll. Die praktische Anwendung der Erfindung besteht ja darin, die Unkrautbekämpfung zwischen Reihen von Kulturpflanzen dadurch zu verbessern, dass auch nahe neben den Kulturpflanzen wachsendes Unkraut bekämpft wird. Um dies zu erreichen, müssen die Bearbeitungswerkzeuge möglichst nahe an die Kulturpflanzen herangeführt werden, ohne diese zu schädigen. Dieses Ziel kann durch eine Veränderung des Abstandes zwischen den Bearbeitungswerkzeugen in einer horizontalen Richtung erfolgen.

Eine Änderung des Abstandes zwischen den Bearbeitungswerkzeugen durch eine elastische Deformation des rahmenartigen Elements kann aber am effektivesten dadurch erfolgen, dass das rahmenartige Element im wesentlichen in einer Ebene ausbildet ist. Besonders bevorzugt ist das rahmenartige Element so an der Bearbeitungseinheit angeordnet, dass die Ebene des rahmenartige Elementes in horizontaler Richtung ausgebildet ist. In diesem Fall kann jede Bewegung der Stellmittel direkt proportional in eine Veränderung des Abstandes zwischen den Bearbeitungswerkzeugen umgesetzt werden.

Besonders bevorzugt weist das rahmenartige Element zumindest eine Schlaufe auf, wobei die Schlaufe in der Ebene des rahmenartigen Elements oder senkrecht zur Ebene des rahmenartigen Elements verläuft. Bei einer in der Ebene des rahmenartigen Elements angeordneten Schlaufe wird die elastische Deformierbarkeit des rahmenartigen Elements verbessert. Im Bereich einer senkrecht zur Ebene des rahmenartigen Elements angeordneten Schlaufe kann vorteilhafterweise ein Bearbeitungswerkzeug angebracht werden, insbesondere eine Hackschar, welches dann federnd eventuellen Bodenunebenheiten folgen kann.

Um die erfindungsgemäß vorgesehene Änderung der Ausdehnung des rahmenartigen Elements quer zur Fahrtrichtung besonders einfach zu bewirken, ist eine Bewegung des ersten Stellmittels und des zweiten Stellmittels in entgegengesetzter Richtung besonders bevorzugt. Grundsätzlich kann auch eine unterschiedlich starke Bewegung der beiden Stellmittel in die selbe Richtung oder sogar eine Bewegung der Stellmittel in eine beliebige Richtung, die lediglich eine Komponente in der Ebene des rahmenartigen Elements aufweisen muss, in eine Änderung der Ausdehnung des rahmenartigen Elements quer zur Fahrtrichtung umgesetzt werden. Konstruktiv am wenigsten aufwändig ist aber die Übertragung einer in entgegengesetzter Richtung orientierten Bewegung des ersten und des zweiten Stellmittels auf das rahmenartige Element. Besonders bevorzugt ist durch die erfindungsgemäß vorgesehene Verstelleinheit eine lineare, quer zur Fahrtrichtung orientierte Bewegung des ersten und des zweiten Stellmittels bewirkbar. Ganz besonders bevorzugt ist die Bewegung des ersten Stellmittels antiparallel zur Bewegung des zweiten Stellmittels bewirkbar. Durch diese Ausführungsform kann durch ein bestimmtes Ausmaß an Bewegung der Stellmittel eine besonders starke Deformation des rahmenartigen Elements quer zur Fahrtrichtung bewirkt werden.

Gemäß einer besonders bevorzugten Ausführungsform der vorliegenden Erfindung ist zumindest ein Bewegungsübertragungsmittel vorgesehen, wobei die zumindest eine Verstelleinheit zum Ausführen einer Bewegung des ersten und des zweiten Stellmittels über das zumindest eine Bewegungsübertragungsmittel mit dem ersten Stellmittel und dem zweiten Stellmittel verbunden ist. Besondere Vorteile ergeben sich dadurch, dass die Bewegungen des ersten und des zweiten Stellmittels nicht durch zwei unterschiedliche Verstelleinheiten bewirkt werden, sondern dass nur eine Verstelleinheit vorgesehen werden muss, die beide Stellmittel bewegt. Die vorliegende Anmeldung umfasst aber selbstverständlich auch Ausführungsformen mit mehreren Verstelleinheiten und mehreren Bewegungsübertragungsmitteln.

Besonders bevorzugt sind Ausführungsformen, bei denen nur ein Bewegungsübertragungsmittel eingesetzt wird, welches sowohl mit dem ersten Stellmittel als auch mit dem zweiten Stellmittel verbunden ist. Eine durch die Verstelleinheit bewirkbare Bewegung wird in diesem Fall über das eine Bewegungsübertragungsmittel gleichzeitig auf beide Stellmittel übertragen.

Ganz besonders bevorzugt sind Ausführungsformen, bei denen ein eine langgestreckte Form aufweisendes Bewegungsübertragungsmittel eingesetzt wird, das an einem Punkt fest, aber drehbar mit dem Rahmen verbunden ist. Ist die Verstelleinheit im Bereich eines Endes des langgestreckten Bewegungsübertragungsmittels mit diesem verbunden, so wird eine durch die Verstelleinheit verursachte Bewegung in eine Drehung des Bewegungsübertragungsmittels umgesetzt. In dem Fachmann bekannter Weise ist in diesem Fall die Verstelleinheit schwenkbar gelagert und kann so der Auslenkung des Bewegungsübertragungsmittels aufgrund von dessen Drehbewegung folgen. In dem Bewegungsübertragungsmittel ist in dem Fachmann bekannter Weise zumindest ein Langloch vorgesehen, in das eine Ausbuchtung oder ein Verbindungsmittel des zweiten Stellmittels eingreift. Aufgrund der Ausbildung als Langloch kann das Bewegungsübertragungsmittel eine Drehbewegung durchführen, ohne dass es zu einer Bewegung des Stellmittels in Fahrtrichtung kommt.

Als Bewegungsübertragungsmittel kann auch ein Zahnrad eingesetzt werden, das in einen am ersten und am zweiten Stellmittel als Zahnstange ausgebildeten Abschnitt eingreift. Durch eine Drehung des Zahnrads werden die beiden Stellmittel in eine antiparallele Richtung bewegt. Die Drehung des Zahnrades kann durch händisches Verschwenkung beispielsweise eines hebelartigen Elements erfolgen, das fest mit der Drehachse des Zahnrades verbunden ist. Daneben kann ein Mittel zur Fixierung des hebelartigen Elements und damit des Zahnrades in einer bestimmten Position vorgesehen sein.

Gemäß einer weiteren bevorzugten Ausführungsform ist das erste Verbindungselement mit zumindest einem Gelenk ausgestattet und das zweite Verbindungselement ist mit zumindest einem Gelenk ausgestattet. Beim Einsatz des erfindungsgemäßen Bodenbearbeitungsgerätes auf dem Acker kommt es zu Auf- und Abbewegungen der Bearbeitungseinheit, die durch von einem nachfolgend noch näher beschriebenen Tiefenführungsrad übertragene Bodenunebenheiten verursacht werden. Die mit jeweils zumindest einem Gelenk ausgestatteten Verbindungsmittel können durch ihre Gelenke diesen Bewegungen problemlos folgen.

Gemäß einer besonders bevorzugten Ausführungsform der vorliegenden Erfindung ist ein quer zur Fahrtrichtung angeordnetes Rohr vorgesehen, wobei das Rohr zumindest eine erste Führungshülse und eine zweite Führungshülse aufweist. Die erste Führungshülse ist an ihrer Außenseite mit einem ersten Kraftübertragungsmittel und die zweite Führungshülse ist an ihrer Außenseite mit einem zweiten Kraftübertragungsmittel ausgestattet. Die Verbindung des ersten, beweglich ausgebildeten Stellmittels mit dem rahmenartigen Element ist in diesem Fall dadurch realisiert, dass das erste, beweglich ausgebildete Stellmittel über das erste Kraftübertragungsmittel mit der ersten Führungshülse verbunden ist und die erste Führungshülse über das erste Verbindungselement mit dem rahmenartigen Element verbunden ist. Die Verbindung des zweiten, beweglich ausgebildeten Stellmittels mit dem rahmenartigen Element ist dadurch ausgebildet, dass das zweite, beweglich ausgebildete Stellmittel über das zweite Kraftübertragungsmittel mit der zweiten Führungshülse verbunden ist und die zweite Führungshülse über das zweite Verbindungselement mit dem rahmenartigen Element verbunden ist.

Gemäß dieser Ausführungsform wird das aufgrund seiner elastischen Eigenschaften in seiner Form veränderliche rahmenartige Element mit einer Vorrichtung kombiniert, die durch eine lineare Bewegung von Hülsen entlang eines Rohres eine Anpassung der Form des rahmenartigen Elements bewirkt.

Durch die an dem Rohr vorgesehenen Führungshülsen und deren Verbindung mit dem rahmenartigen Element wird erreicht, dass eine Bewegung der Führungshülsen in eine Deformation des rahmenartigen Elements umgesetzt wird. Dabei wird die Bewegung der Führungshülsen über Verbindungsmittel auf das rahmenartige Element übertragen, dessen elastische Eigenschaften eine Anpassung der Breite des rahmenartigen Elements quer zur Fahrtrichtung ermöglichen. Die Bewegung der Führungshülsen wird durch zwei Stellmittel verursacht, von denen jeweils eines mit jeweils einer Führungshülse verbunden ist. Dabei wird die Bewegung der Stellmittel über jeweils ein Kraftübertragungsmittel auf die Führungshülsen übertragen.

Die erfindungsgemäß vorgesehene Verbindung des ersten, beweglich ausgebildeten Stellmittels mit dem rahmenartigen Element ist in diesem Fall also dadurch realisiert, dass das erste, beweglich ausgebildete Stellmittel über das erste Kraftübertragungsmittel mit der ersten Führungshülse verbunden ist und die erste Führungshülse über das erste Verbindungselement mit dem rahmenartigen Element verbunden ist. Die Verbindung des zweiten, beweglich ausgebildeten Stellmittels mit dem rahmenartigen Element ist dadurch realisiert, dass das zweite, beweglich ausgebildete Stellmittel über das zweite Kraftübertragungsmittel mit der zweiten Führungshülse verbunden ist und die zweite Führungshülse über das zweite Verbindungselement mit dem rahmenartigen Element verbunden ist.

Die konstruktive Verwirklichung des Bodenbearbeitungsgerätes gestaltet sich in dem Fall, dass die Führungshülsen an einem quer zur Fahrtrichtung angeordneten Rohr angebracht sind, besonders einfach. Ähnliches gilt für die Übertragung der Bewegung der Stellmittel über jeweils ein Kraftübertragungsmittel auf die Führungshülsen. Diese Übertragung ist besonders einfach dadurch zu verwirklichen, dass es sich bei dem ersten Stellmittel um ein erstes, quer zur Fahrtrichtung beweglich ausgebildetes Stellmittel und bei dem zweiten Stellmittel um ein zweites, quer zur Fahrtrichtung beweglich ausgebildetes Stellmittel handelt. In diesem Fall kann die Bewegung der Stellmittel über die erfindungsgemäß vorgesehenen Kraftübertragungsmittel direkt in eine quer zur Fahrtrichtung orientierte Bewegung der ersten Führungshülse und der zweiten Führungshülse umgesetzt werden. Bewegen sich die beiden Führungshülsen aufeinander zu, so wird die Ausdehnung des rahmenartigen Elements quer zur Fahrtrichtung verringert. Bewegen sich die beiden Führungshülsen voneinander weg, so wird die Ausdehnung des rahmenartigen Elements quer zur Fahrtrichtung vergrößert.

Besonders bevorzugt sind also Ausführungsformen mit einem ersten, quer zur Fahrtrichtung beweglich ausgebildeten Stellmittel und einem zweiten, quer zur Fahrtrichtung beweglich ausgebildeten Stellmittel. Bei den Stellmitteln handelt es sich bevorzugt um quer zur Fahrtrichtung angeordnete Rohre.

Die beweglich ausgebildeten Stellmittel können auch durch eine erste und eine zweite Gewindehülse verwirklicht werden, die mit einem ersten und einem zweiten Eingriffsmittel zusammenwirken. Das erste und das zweite Eingriffsmittel sind an einem quer zur Fahrtrichtung angeordneten Rohr angebracht. Das erste Eingriffsmittel steht dabei in Eingriff mit der ein linksdrehendes Innengewinde aufweisenden ersten Gewindehülse, und das zweite Eingriffsmittel in Eingriff mit der ein rechtsdrehendes Innengewinde aufweisenden zweiten Gewindehülse, wobei die erste Gewindehülse und die zweite Gewindehülse jeweils über zumindest ein Verbindungselement mit dem rahmenartigen Element verbundenen sind. Durch eine Drehung des Rohres um dessen Längsachse werden die Gewindehülsen relativ zueinander derart bewegt, dass sich aufgrund der Übertragung der Bewegung über die Verbindungselemente auf das rahmenartige Element die Ausdehnung des rahmenartigen Elements quer zur Fahrtrichtung verändert.

Besonders bevorzugt sind Ausführungsformen, bei denen die erste Führungshülse und die zweite Führungshülse in entgegengesetzter Richtung bewegbar ausgebildet sind.

An dieser Stelle sei angemerkt, dass nachfolgend mehrfach Anordnungen bestimmter Teile des Bodenbearbeitungsgeräts relativ zu einer Gassenmittellinie beschrieben werden. Bei der Gassenmittellinie handelt es sich um eine gedachte Linie, die in der Mitte der Gasse zwischen zwei Reihen von Kulturpflanzen verläuft. Bei Verwendung des Bodenbearbeitungsgeräts verläuft die Gassenmittellinie daher parallel zur Fahrtrichtung, in der das Bodenbearbeitungsgerät bewegt wird. Wenn also die Anordnung bestimmter Teile des Bodenbearbeitungsgeräts relativ zur Gassenmittellinie definiert wird, so stellt es für den Fachmann kein Problem dar zu erkennen, dass damit die Anordnung dieser Teile am Bodenbearbeitungsgerät bei dessen Einsatz auf dem Acker gemeint ist.

Unter einem "Rohr" wird im Rahmen der vorliegenden Erfindung ein langgestrecktes Element verstanden, das sowohl hohl wie auch als massiver Vollkörper ausgebildet sein kann. Dabei kann es sich um ein im Querschnitt kreisförmiges, ovales oder auch eckiges Element handeln. Ein zylindrischer Körper kann also ebenso verwendet werden wie ein Vierkantrohr.

Die an dem Rohr angeordneten Führungshülsen umgreifen das Rohr im wesentlichen passgenau. Je nach Ausbildung des Rohres weisen die Führungshülsen einen unterschiedlichen Querschnitt auf. Handelt es sich bei dem Rohr beispielsweise um einen Zylinder, so sind die Führungshülsen als Hohlzylinder ausgebildet. Ist das Rohr ein Profilrohr mit einer grundsätzlich beliebigen Zahl von Kanten, so weisen die Führungshülen eine entsprechende Zahl von Kanten auf.

Die an dem Rohr angeordneten Führungshülsen müssen das Rohr nicht vollständig umgreifen, sondern können auch in einer nicht-geschlossenen Form ausgebildet sein. Im Falle eines zylindrischen Rohres oder eines Rohres mit ovalem Querschnitt können die Führungshülsen also beispielsweise C-förmig ausgebildet sein. Im Falle eines Vierkantrohres können die Führungshülsen im wesentlichen U-förmig ausgebildet sein, wobei die Winkel zwischen Steg und Schenkel des "U" 90° betragen, der Übergang also eckig ausgebildet ist. Außerdem müssten an den Enden der Schenkel kurze, das Rohr übergreifende Überstände vorgesehen sein, um einen sicheren Sitz der Führungshülse am Rohr zu gewährleisten.

Der Rahmen des Bodenbearbeitungsgeräts weist bevorzugt einen an sich bekannten Dreipunktturm auf, mit dessen Hilfe die Verbindung des Bodenbearbeitungsgeräts mit einem Dreipunktgestänge der Zugmaschine vorgenommen werden kann.

Besonders bevorzugt handelt es sich bei dem ersten und bei dem zweiten Kraftübertragungsmittel um ein erstes und ein zweites Gestängeteil, wobei erstes und zweites Gestängeteil unterschiedliche Längen aufweisen. Auf diese Weise ist in konstruktiv besonders einfacher Weise eine feste Verbindung zwischen Führungshülsen und Stellmitteln möglich. Aufgrund der unterschiedlichen Länge des ersten und zweiten Gestängeteils können die Stellmittel in Fahrtrichung versetzt zueinander angeordnet werden. Für den Fachmann ist klar, dass das erste und das zweite Kraftübertragungsmittel in vertikaler Richtung eine gewisse Flexibilität aufweisen können und lediglich in horizontaler Richtung nicht deformierbar ausgebildet sein dürfen. Die Verbindung zwischen Führungshülsen und Stellmitteln muss nämlich zur Kraftübertragung lediglich in horizontaler Richtung fest ausgebildet sein. Aufgrund der an dem Rahmen in vertikaler Richtung beweglich angeordneten Bearbeitungseinheit kann es zu einer vertikalen Bewegung des Rohres relativ zu den Stellmitteln kommen. Diese vertikale Bewegung kann auf verschiedene Arten ermöglicht werden. Die Kraftübertragungsmittel können beispielsweise mit einem Gelenk ausgestattet sein oder als teleskopierbare Stange ausgebildet sein. Es können aber auch die Verbindungselemente, welche die Führungshülsen mit dem rahmenartigen Element verbinden, in vertikaler Richtung flexibel ausgebildet sein. Auch in diesem Fall können Gelenke oder teleskopierbare Stangen zum Einsatz kommen.

Beim Einsatz des erfindungsgemäßen Bodenbearbeitungsgerätes auf dem Acker kommt es zu einer hohen Materialbeanspruchung. Insbesondere die Auf- und Abbewegungen der Bearbeitungseinheit, die durch von einem nachfolgend noch näher beschriebenen Tiefenführungsrad übertragene Bodenunebenheiten verursacht sind, können zu einem vorzeitigen Verschleiß der an der Bearbeitungseinheit angebrachten Mittel führen. Der Einsatz von Führungshülsen, die an einem Rohr angeordnet sind, eröffnet die Möglichkeit, dieses Rohr in hartverchromter Form auszuführen. Ein Verschleiß der Führungshülsen ist daher nicht zu erwarten. Zudem wird die Möglichkeit geschaffen, das Rohr als Rahmenrohr auszuführen oder fest mit einem Rahmenrohr zu verbinden.

Gemäß einer weiteren, besonders bevorzugten Ausführungsform handelt es sich bei dem ersten und bei dem zweiten Kraftübertragungsmittel um jeweils eine zapfenartige Ausbuchtung an der Außenseite der ersten Führungshülse bzw. an der Außenseite der zweiten Führungshülse. Das erste Stellmittel und das zweite Stellmittel weisen an ihrer Außenseite jeweils ein gabelartiges Paar von Ausbuchtungen auf, wobei die zapfenartige Ausbuchtung der ersten Führungshülse in Eingriff mit dem gabelartigen Paar von Ausbuchtungen des ersten Stellmittels steht und die zapfenartige Ausbuchtung der zweiten Führungshülse in Eingriff mit dem gabelartigen Paar von Ausbuchtungen des zweiten Stellmittels steht. In dieser Ausführungsform sind das erste Stellmittel und das zweite Stellmittel über jeweils eine Führungshülse und die Führungshülsen über jeweils zumindest ein Verbindungselement mit dem rahmenartigen Element verbunden.

Gemäß einer bevorzugten Ausführungsform weist das rahmenartige Element in Draufsicht eine parallelogrammartige Form auf. Der besondere Vorteil eines rahmenartigen Elements in parallelogrammartiger Form liegt darin, dass die elastischen Eigenschaften des rahmenartigen Elements möglichst effektiv zu einer Änderung der Ausdehnung des rahmenartigen Elements quer zur Fahrtrichtung genutzt werden können.

Besonders bevorzugt sind Ausführungsformen, bei denen das rahmenartige Element in Form eines Rhombus ausgebildet ist. Bei einem Rhombus handelt es sich bekanntermaßen um ein konvexes Viereck, dessen vier Seiten gleich lang sind. Rhomben sind spezielle Formen von Parallelogrammen. Ein rahmenartiges Element in Form eines Rhombus weist die im Zusammenhang mit einer parallelogrammartigen Form genannten Vorteile auf. Zudem besitzt der Rhombus einen hohen Grad an Symmetrie, wodurch eine identische Veränderung der Form des rahmenartigen Elements auf beiden Seiten der Gassenmittellinie ermöglicht wird.

Im Allgemeinen sind Ausführungsformen besonders bevorzugt, bei denen das rahmenartige Element eine Symmetrieachse in Fahrtrichtung aufweist. Das rahmenartige Element ist in diesem Fall symmetrisch zur Gassenmittellinie aufgebaut. Da das erste Stellmittel über das erste Verbindungsmittel besonders bevorzugt mit einem, auf einer Seite der Symmetrieachse angeordneten Teil des rahmenartigen Elements verbunden ist, und da das zweite Stellmittel über das zweite Verbindungsmittel besonders bevorzugt mit dem auf der anderen Seite der Symmetrieachse angeordneten Teil des rahmenartigen Elements verbunden ist, bewirkt eine symmetrische Bewegung der beiden Stellmittel auch eine symmetrische Deformation des rahmenartigen Elements.

Besonders bevorzugt handelt es sich bei der Verstelleinheit um einen mittels eines Steuergeräts ansteuerbaren elektrischen oder hydraulischen Stellantrieb. Dadurch kann die Bewegung der Stellmittel von der Zugmaschine aus auch während der Bodenbearbeitung erfolgen. Die Breite des rahmenartigen Elements kann damit bei Bedarf einfach und schnell an die jeweiligen Verhältnisse auf dem Acker angepasst werden, wobei der Bodenbearbeitungsvorgang nicht unterbrochen zu werden braucht. Die Verstelleinheit kann zudem mit einem aus dem Stand der Technik bekannten Wegmessystem ausgestattet sein.

Ein elektrischer Stellantrieb kann zweckmäßigerweise einen an dem Rahmen angeordneten Getriebemotor umfassen, der z.B. über einen Riemen- oder Kettenantrieb mit mindestens einem Stellrad zur Drehung mindestens einer mit einem Stellmittel verbundenen Antriebswelle gekoppelt ist. Ein bezüglich der Energieversorgung besonders vorteilhafter und daher für den Antrieb auch großer Bodenbearbeitungsgeräte mit einer Vielzahl an Bearbeitungseinheiten bestens geeigneter hydraulischer Antrieb kann einen am Rahmen angeordneten Hydraulikzylinder umfassen, der über eine Zugmittelanordnung mit mindestens einem Stellrad zur Drehung mindestens einer mit einem Stellmittel verbundenen Antriebswelle gekoppelt ist.

Bei der Verstelleinheit kann es sich aber auch um ein händisch bedienbares Element handeln. In diesem Fall kann die Bewegung der Stellmittel nicht von der Zugmaschine aus während der Bodenbearbeitung erfolgen. Vielmehr muss zur Anpassung der Breite der rahmenartigen Elemente an die jeweiligen Verhältnisse auf dem Acker der Bodenbearbeitungsvorgang unterbrochen werden, um die Verstelleinheit händisch zu bewegen. Dem Nachteil der Unterbrechung der Bodenbearbeitung steht eine deutliche Verminderung der Herstellungskosten des Bodenbearbeitungsgerätes bei gleichzeitig verbesserter Robustheit und Widerstandsfähigkeit gegen Belastungen im Einsatz gegenüber.

Auch durch ein händisch bedienbares Element als Verstelleinheit wird eine lineare, quer zur Fahrtrichtung orientierte Bewegung des ersten und des zweiten Stellmittels bewirkt, wobei die Bewegung des ersten Stellmittels antiparallel zur Bewegung des zweiten Stellmittels orientiert ist. Die Bewegung der Stellmittel wird auf diese Weise direkt proportional in eine entsprechende Veränderung der Ausdehnung rahmenartigen Elemente quer zur Fahrtrichtung umgesetzt.

Gemäß einer besonders bevorzugten Ausführungsform der vorliegenden Erfindung ist die erste Führungshülse durch zwei Verbindungselemente mit dem rahmenartigen Element verbunden. Durch den Einsatz von zwei Verbindungselementen, die bevorzugt jeweils an einem der beiden Endabschnitte der Führungshülse befestigt sind, zur Verbindung von Führungshülse und rahmenartigen Element wird eine verbesserte Stabilität der Konstruktion erreicht. Besonders bevorzugt ist entsprechend die zweite Führungshülse durch zwei Verbindungselemente mit dem rahmenartigen Element verbunden.

Gemäß einer weiteren, besonders bevorzugten Ausführungsform der vorliegenden Erfindung ist an dem Rahmen eine Mehrzahl an Bearbeitungseinheiten mit einer Mehrzahl an rahmenartigen Elementen angeordnet. Durch eine Bewegung des ersten Stellmittels und des zweiten Stellmittels wird die Mehrzahl an rahmenartigen Elementen derart deformiert, dass sich die Ausdehnung der rahmenartigen Elemente quer zur Fahrtrichtung in identischer Weise verändert. Diese Ausführungsform trägt der Tatsache Rechnung, dass moderne landwirtschaftliche Geräte eine Breite von mehreren Metern aufweisen und dadurch eine Mehrzahl an Gassen zwischen Reihen von Kulturpflanzen in einem Arbeitsgang gleichzeitig bearbeitet werden kann. Mit der beschriebenen Ausführungsform werden sämtliche rahmenartigen Elemente synchron deformiert und die daran befestigten Bearbeitungswerkzeuge synchron bewegt. Auf eine vom Landwirt auf der Zugmaschine wahrgenommene Änderung der Bedingungen oder der Pflanzenart des Anbaugebiets kann dadurch unmittelbar mit einer entsprechenden Anpassung der Breite sämtlicher rahmenartigen Elemente reagiert werden.

Gemäß einer weiteren, besonders bevorzugten Ausführungsform der vorliegenden Erfindung ist in dem Fall, dass an dem Rahmen eine Mehrzahl an Bearbeitungseinheiten mit einer Mehrzahl an rahmenartigen Elementen angeordnet ist, ein quer zur Fahrtrichtung angeordnetes Rohr mit einer der Anzahl an Bearbeitungseinheiten entsprechenden Anzahl an ersten und zweiten Eingriffsmitteln vorgesehen. Jedes der ersten Eingriffsmittel steht in Eingriff mit jeweils einem, ein linksdrehendes Innengewinde aufweisenden ersten Stellmittel, das in Form einer ersten Gewindehülse ausgebildet ist, und jedes der zweiten Eingriffsmittel steht in Eingriff mit jeweils einem, ein rechtsdrehendes Innengewinde aufweisenden zweiten Stellmittel, das in Form einer zweiten Gewindehülse ausgebildet ist. Durch die an dem Rohr vorgesehenen Eingriffsmittel und deren Kombination mit Gewindehülsen, die mit verschiedengängigen Innengewinden ausgestattet sind, wird erreicht, dass die Drehung des Rohres in die eine Richtung eine Vergrößerung der Distanz zwischen den beiden Gewindehülsen bewirkt und durch eine Drehung des Rohres in die andere Richtung eine Verringerung der Distanz zwischen den beiden Gewindehülsen erfolgt. Die Bewegung der Gewindehülsen wird über Verbindungsmittel auf das rahmenartige Element übertragen, dessen elastische Eigenschaften eine Anpassung der Breite des rahmenartigen Elements quer zur Fahrtrichtung erlaubt.

Dies erfolgt in der beschriebenen Weise sowohl bei einer einzelnen Bearbeitungseinheit wie auch bei einer Mehrzahl von Bearbeitungseinheiten. Im Falle einer Mehrzahl an Bearbeitungseinheiten werden durch eine Drehung des Rohres um dessen Längsachse die rahmenartigen Elemente in identischer Weise deformiert, wodurch sich die Ausdehnung der Mehrzahl an rahmenartigen Elementen quer zur Fahrtrichtung in identischer Weise verändert. Auch diese Ausführungsform trägt der Tatsache Rechnung, dass moderne landwirtschaftliche Geräte eine Breite von mehreren Metern aufweisen und dadurch eine Mehrzahl an Gassen zwischen Reihen von Kulturpflanzen in einem Arbeitsgang gleichzeitig bearbeitet werden kann. Mit der beschriebenen Ausführungsform werden sämtliche Gewindehülsen synchron bewegt und dadurch sämtliche rahmenartigen Elemente synchron deformiert. Auf eine vom Landwirt auf der Zugmaschine wahrgenommene Änderung der Bedingungen oder der Pflanzenart des Anbaugebiets kann dadurch unmittelbar mit einer entsprechenden Anpassung der Breite sämtlicher rahmenartigen Elemente reagiert werden.

Besonders bevorzugt weist die zumindest eine, an dem Rahmen angeordnete Bearbeitungseinheit einen ersten und einen zweiten Striegelzinken auf, wobei der erste und der zweite Striegelzinken mit dem rahmenartigen Element der jeweiligen Bearbeitungseinheit verbunden ist. Striegelzinken dienen zum einen dazu, die von den Hackschare abgelösten Erdschollen und -brocken zu zerkleinern, und zum anderen dazu, das Unkraut an die Erdoberfläche zu ziehen. Daneben dienen die Striegelzinken dazu, verfestigten Boden in einem relativ nahe bei den Kulturpflanzen gelegenen Bereich aufzubrechen. Dieser Bereich wird in der Regel von den Hackscharen nicht erreicht, da die Gefahr einer Schädigung der Kulturpflanzen durch die Hackschare zu groß ist. Im Normalfall ist keine Anpassung des Abstandes zwischen den Striegelzinken erforderlich, da der Abstand zwischen den Reihen von Kulturpflanzen durch die Aussaat vorgegeben und daher im Wesentlichen immer gleich ist.

Im Hinblick auf die Bekämpfung von Unkraut, das besonders nahe an den Kulturpflanzen wächst, ist es aber von besonderem Vorteil, die Striegelzinken möglichst nahe entlang der Reihe von Kulturpflanzen zu bewegen. Um dabei eine Schädigung der Kulturpflanzen zu vermeiden, muss auf eine exakte Positionierung der Striegelzinken geachtet werden. Durch das Vorsehen von zwei Striegelzinken können beide der jeweiligen Bearbeitungseinheit benachbarten Reihen von Kulturpflanzen von Unkraut befreit werden. Durch die Verbindung der Striegelzinken mit dem rahmenartigen Element kann eine Anpassung des Abstandes der beiden Striegelzinken voneinander vorgenommen werden.

Besonders bevorzugt ist der erste Striegelzinken mit einem auf einer Seite der Gassenmittellinie angeordneten Abschnitt des rahmenartigen Elements verbunden und der zweite Striegelzinken ist mit einem auf der gegenüberliegenden Seite der Gassenmittellinie angeordneten Abschnitt des rahmenartigen Elements verbunden. Dadurch kann eine Deformation des rahmenartigen Elements besonders gut in eine Veränderung des Abstandes zwischen den beiden Striegelzinken umgesetzt werden.

Bevorzugt sind die Striegelzinken in an sich bekannter Weise verschwenkbar ausgebildet, wobei eine den Striegelzinken zugeordnete Verstelleinrichtung vorgesehen ist, durch die die Vorspannung der Striegelzinken verstellbar ist. Vorteilhafterweise besteht diese Verstelleinrichtung aus einem Draht oder einer Schnur, welcher am Striegelzinken befestigt ist, über ein Rahmenrohr umgelenkt wird und der an einem weiteren Rahmenrohr befestigt ist. Durch Drehung des Rahmenrohres wird der Draht bzw. die Schnur um das Rahmenrohr aufgewickelt und übt dadurch eine entsprechende Zugkraft auf den Striegelzinken aus. Insbesondere wenn einer solchen Verstelleinrichtung eine Antriebseinheit zugeordnet ist, wobei es sich bei der Antriebseinheit besonders bevorzugt um einen mittels eines Steuergeräts ansteuerbaren elektrischen oder hydraulischen Stellantrieb handelt, kann die Vorspannung der Striegelzinken und damit die Einstellung des Zinkendruckes von der Zugmaschine aus auch während der Bodenbearbeitung erfolgen. Der Zinkendruck kann bei Bedarf einfach und schnell an die jeweiligen Verhältnisse auf dem Acker angepasst werden, wobei der Bodenbearbeitungsvorgang nicht unterbrochen zu werden braucht.

Unter bestimmten Umständen kann es auch vorkommen, dass die Striegelzinken bei der Bodenbearbeitung nicht zum Einsatz kommen sollen. In einem solchen Fall werden die Striegelzinken händisch entgegen der Federkraft nach oben gebogen und in einer entsprechenden Haltevorrichtung fixiert. Bei Bedarf können die Striegelzinken von der Haltvorrichtung gelöst und in der beschriebenen Weise wieder zur Bodenbearbeitung eingesetzt werden.

Gemäß einer weiteren bevorzugten Ausführungsform weist jede Bearbeitungseinheit eine erste Hackschar, eine zweite Hackschar und eine dritte Hackschar auf. Besonders bevorzugt sind die erste, die zweite und die dritte Hackschar in Fahrtrichtung und quer zur Fahrtrichtung derart zueinander versetzt angeordnet, dass die Hackschare ein gleichschenkliges Dreieck bilden. Dabei ist die erste Hackschar im Bereich der Gassenmittellinie angeordnet und bildet die in Fahrtrichtung vorauseilende oder nacheilende Spitze des gleichschenkligen Dreiecks. Durch eine solche Anordnung der Hackschare wird eine Bearbeitung des Bodens über die gesamte Breite der Gasse zwischen zwei Reihen von Kulturpflanzen möglich.

Alternativ kann eine Bearbeitung des Bodens auf beiden Seiten einer Reihe von Kulturpflanzen erfolgen. Die Bearbeitungseinheit wird in diesem Fall vertikal oberhalb einer Reihe von Kulturpflanzen geführt. Um die Pflanzen bei der Bearbeitung nicht zu schädigen, wird in diesem Fall auf die erste Hackschar verzichtet und die Bearbeitung nur mit der zweiten und dritten Hackschar vorgenommen, die den Boden links bzw. rechts von der Pflanzenreihe bearbeiten. Dem Fachmann ist klar, dass in diesem Fall zwei Tiefenführungsräder montiert werden müssen, die zu beiden Seiten der Pflanzenreihe bewegt werden. Ebenso ist dem Fachmann klar, dass bei einer Bearbeitung des Bodens auf beiden Seiten einer Reihe von Kulturpflanzen die optional an der Bearbeitungseinheit vorgesehenen Sechen entsprechend positioniert und ausgerichtet werden müssen.

Gemäß einer weiteren, besonders bevorzugten Ausführungsform der vorliegenden Erfindung ist die zweite und die dritte Hackschar durch ein oder mehrere Verbindungsmittel mit dem rahmenartigen Element der jeweiligen Bearbeitungseinheit verbunden. Durch die Verbindung der beiden, nicht im Bereich der Gassenmittellinie angeordneten Hackschare mit dem rahmenartigen Element kann eine Anpassung des Abstandes der beiden Hackschare voneinander vorgenommen werden. Damit kann eine Anpassung der Breite des durch die Hackschare bearbeiteten Bereiches zwischen den Reihen an Kulturpflanzen an die Gegebenheiten an einem spezifischen Einsatzort vorgenommen werden.

Bevorzugt sind an jeder Bearbeitungseinheit eine erste Seche, eine zweite Seche, eine dritte Seche und eine vierte Seche angeordnet, wobei jeweils die erste und die zweite Seche ein vorderes Sechenpaar bilden und jeweils die dritte und die vierte Seche ein hinteres Sechenpaar bilden. Bevorzugt handelt es sich um Scheibensechen. Die erste Seche ist durch ein erstes Hilfsverbindungsmittel mit dem rahmenartigen Element verbunden, die zweite Seche ist durch ein zweites Hilfsverbindungsmittel mit dem rahmenartigen Element verbunden, die dritte Seche ist durch ein drittes Hilfsverbindungsmittel mit dem rahmenartigen Element verbunden und die vierte Seche ist durch ein viertes Hilfsverbindungsmittel mit dem rahmenartigen Element verbunden. Bevorzugt sind die beiden Sechen des vorderen Sechenpaares auf verschiedenen Seiten der Gassenmittellinie angeordnet und die beiden Sechen des hinteren Sechenpaares sind auf verschiedenen Seiten der Gassenmittellinie angeordnet.

Dabei sind wie üblich die Scheibenseche des vorderen Sechenpaares derart angestellt, dass sie Erde von der Pflanzenreihe abtragen, und die Scheibenseche des hinteren Sechenpaares sind derart angestellt, dass sie Erde zu den Pflanzenreihen hinfördern. Besonders bevorzugt sind die Seche über ein zahnradähnlich ausgebildetes Stecksystem mit Sicherungsstift werkzeuglos an dem Bodenbearbeitungsgerät montierbar. Dadurch kann der Anstellwinkel der Scheibenseche variiert werden.

Durch die Verbindung der Sechen mit dem rahmenartigen Element kann eine Anpassung des Abstandes der beiden Sechen eines Sechenpaares voneinander vorgenommen werden. Damit kann der Abstand der Sechen voneinander an die Breite des durch die Hackschare bearbeiteten Bereiches zwischen den Reihen an Kulturpflanzen angepasst werden.

Bevorzugt sind jeweils zwei Hilfsverbindungsmittel, durch die die einzelnen Sechen mit dem rahmenartigen Element verbunden sind, mit jeweils einen, zentral innerhalb des rahmenartigen Elements vorgesehenen Ring verbunden. Dabei ist jeweils eine vordere Seche und eine hintere Seche, die auf verschiedenen Seiten der Gassenmittellinie angeordnet sind, mit einem Ring verbunden. Die Ringe sind relativ zueinander verdrehbar ausgebildet, wodurch die zur Veränderung des Abstandes zwischen den Sechen eines Sechenpaares erforderliche Beweglichkeit sichergestellt wird. Es können aber auch vier Ringe vorgesehen sein, wobei in diesem Fall jede Seche einzeln und unabhängig von den anderen Sechen beweglich ausgebildet ist.

Die Ringe sind um einen vertikal ausgerichteten Stützfuß gelegt, welcher ein jeweils einer Bearbeitungseinheit zugeordnetes Tiefenführungsrad vertikal verschiebbar an dem Bodenbearbeitungsgerät befestigt. Diese Tiefenführungsräder sorgen für die erforderliche Stabilität des gesamten Bodenbearbeitungsgerätes. Daneben ist vorteilhafterweise ein Rahmenrohr in einer entsprechenden Aussparung des Lagerbockes der Zugmaschine form- und kraftschlüssig angeordnet, wodurch ebenfalls die bei Verwendung des Bodenbearbeitungsgerätes auftretenden Kräfte abgeleitet werden. Schließlich können die Rahmenrohre miteinander verbindende Streben vorgesehen sein, wodurch die Stabilität des Rahmens weiter verbessert wird.

Gemäß einer weiteren bevorzugten Ausführungsform können ein oder mehrere teleskopierbare Stangen vorgesehen sein, an denen weitere Werkzeuge zur Bodenbearbeitung befestigt werden können. Beispielsweise können zusätzliche Hackschare vorgesehen werden. Solche teleskopierbare Stangen verlaufen bevorzugt in Fahrtrichtung F und/oder quer zur Fahrtrichtung F. Aufgrund ihrer Teleskopierbarkeit können die Stangen den Bewegungen des rahmenartigen Elements problemlos folgen. Wird die Ausdehnung des rahmenartigen Elements quer zur Fahrtrichtung vergrößert, so schieben sich die in Fahrtrichtung angeordneten teleskopierbaren Stangen ineinander und verkürzen sich auf diese Weise. Gleichzeitig ziehen sich die quer zur Fahrtrichtung angeordneten teleskopierbaren Stangen auseinander und verlängern sich auf diese Weise. Wird die Ausdehnung des rahmenartigen Elements quer zur Fahrtrichtung verkleinert, so schieben sich die quer zur Fahrtrichtung angeordneten teleskopierbaren Stangen ineinander und verkürzen sich auf diese Weise. Gleichzeitig ziehen sich die in Fahrtrichtung angeordneten teleskopierbaren Stangen auseinander und verlängern sich auf diese Weise.

Wie oben bereits ausgeführt sind gemäß einer besonders bevorzugten Ausführungsform sowohl die Striegelzinken mit dem rahmenartigen Element verbunden, als auch die Hackschare und die Sechen. In diesem Fall kann also eine Anpassung des Abstandes der beiden Striegelzinken voneinander vorgenommen werden, es kann eine Anpassung der Breite des durch die Hackschare bearbeiteten Bereiches erfolgen und es kann eine Anpassung des Abstandes der beiden Sechen eines Sechenpaares sichergestellt werden. Da diese einzelnen Elemente an verschiedenen Punkten an dem rahmenartigen Element befestigt sind, bewirkt eine bestimmte Änderung der Breite des rahmenartigen Elements ein unterschiedliches Ausmaß an Änderung des Abstandes zwischen den Striegelzinken, zwischen den Hackscharen und zwischen den Sechen. Durch eine entsprechende Befestigung der unterschiedlichen Elemente kann somit der Tatsache Rechnung getragen werden, dass es von Vorteil sein kann, wenn sich der Abstand zwischen den einzelnen Elementen in unterschiedlichem Ausmaß ändert. Wird nämlich der Abstand zwischen den Sechen eines Sechenpaares und der Abstand zwischen den Striegelzinken stärker verändert als der Abstand zwischen den Hackscharen, so wird sicher vermieden, dass die Hackschare zu nahe an die Kulturpflanzen geführt werden und diese eventuell schädigen.

In der Praxis ist häufig eine relativ starke Veränderung des Abstandes zwischen den Sechen eines Sechenpaares erwünscht, während der Abstand zwischen zweiter und dritter Hackschar eher in geringerem Maße vorgenommen wird. Eine noch geringere Veränderung des Abstandes wird üblicherweise für die Striegelzinken gewünscht.

Daneben können einzelne Elemente auch fest fixiert werden, sodass deren Abstand relativ zueinander unveränderlich bleibt. Dies kann insbesondere für die Striegelzinken vorgesehen werden, da diese häufig in festem Abstand zueinander vorgesehen sind. Die Striegelzinken werden in diesem Fall nicht an dem rahmenartigen Element befestigt, sondern beispielsweise an dem mittig der Bearbeitungseinheit vorgesehenen Stützfuß. Alternativ können die Striegelzinken auch direkt an einem Rahmenrohr oder an einem sonstigen Bauelement des Rahmens befestigt werden.

### Kurze Beschreibung der Zeichnungen

Die Erfindung soll nachfolgend anhand von Ausführungsbeispielen im Zusammenhang mit den Zeichnungen näher erläutert werden. Es wird aber ausdrücklich darauf hingewiesen, dass die Erfindung nicht auf die angegebenen Beispiele beschränkt sein soll. Es zeigen
- Fig. 1: in schematischer Darstellung eine Draufsicht auf eine Bearbeitungseinheit eines Bodenbearbeitungsgerätes gemäß der Erfindung;
- Fig. 2: in schematischer Darstellung eine Draufsicht auf eine weitere Ausführungsform der Bearbeitungseinheit eines Bodenbearbeitungsgerätes gemäß der Erfindung;
- Fig. 3: in schematischer Darstellung eine Draufsicht auf ein Bodenbearbeitungsgerät gemäß der Erfindung mit Zugmaschine;
- Fig. 4: in schematischer Darstellung eine Draufsicht auf eine weitere Ausführungsform der Bearbeitungseinheit eines Bodenbearbeitungsgerätes gemäß der Erfindung;
- Fig. 5: in schematischer Darstellung eine Draufsicht auf eine weitere Ausführungsform der Bearbeitungseinheit eines Bodenbearbeitungsgerätes gemäß der Erfindung;
- Fig. 6: in schematischer Darstellung eine Draufsicht auf weitere Ausführungsform eines Bodenbearbeitungsgeräts gemäß der Erfindung mit Zugmaschine.

### Wege zur Ausführung der Erfindung

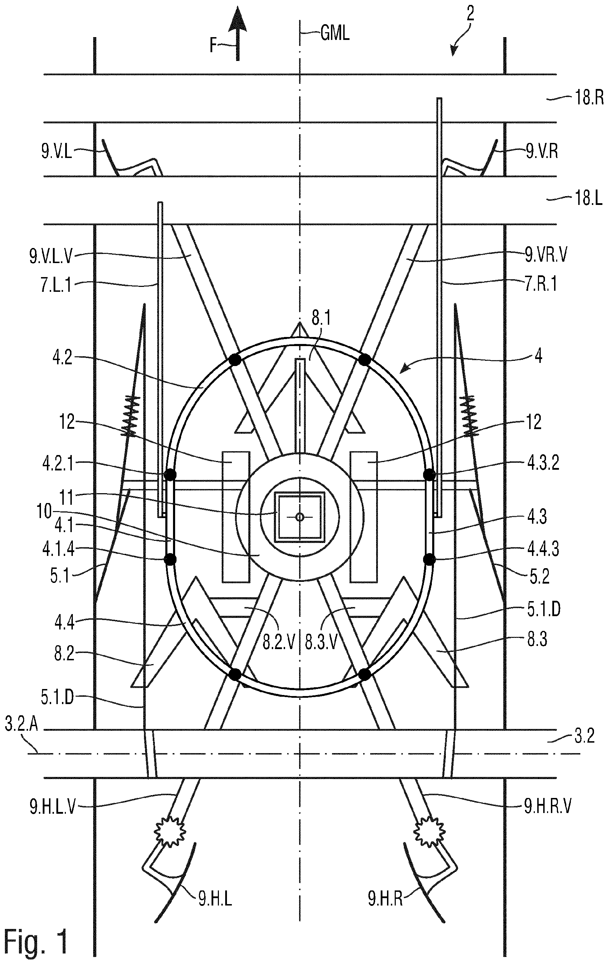

Die Figur 1 zeigt in schematischer Darstellung eine Draufsicht auf eine Bearbeitungseinheit 2 eines Bodenbearbeitungsgerätes für die mechanische Unkrautbekämpfung zwischen Reihen von Kulturpflanzen gemäß der Erfindung. Das Bodenbearbeitungsgerät weist einen an einer Zugmaschine befestigbaren Rahmen zum Bewegen entlang einer Fahrtrichtung F auf, wobei der Rahmen lediglich durch das Rahmenrohr 3.2 angedeutet ist. Weitere Elemente des Rahmens sind für die Beschreibung der Erfindung nicht notwendig und daher in der Figur nicht gezeigt. Das Rahmenrohr 3.2 weist eine Längsachse 3.2.A auf, wobei die Längsachse 3.2.A quer zur Fahrtrichtung F angeordnet ist.

In dem in Figur 1 gezeigten Ausführungsbeispiel erfolgt die Bodenbearbeitung in einer Gasse zwischen zwei Reihen von Kulturpflanzen, wobei die Gasse eine parallel zur Fahrtrichtung F definierte Gassenmittellinie GML aufweist. Wie bereits erwähnt ist es aber auch möglich, eine Bodenbearbeitung links und rechts neben einer Reihe von Kulturpflanzen durchzuführen. In diesem Fall muss aber die nachfolgend noch näher beschriebene erste Hackschare 8.1 entfernt werden.

Die Bearbeitungseinheit 2 weist ein aus einem ersten 4.1, einem zweiten 4.2, einem dritten 4.3 und einem vierten Teilelement 4.4 aufgebautes rahmenartiges Element 4 auf, wobei das erste 4.1 und das dritte Teilelement 4.3 aus einem linearen Stück Federstahl gebildet sind, während das zweite 4.2 und das vierte Teilelement 4.4 aus einem U-förmig gebogenen Stück Federstahl besteht. Die einzelnen Teilelemente sind fest miteinander verbunden und bilden zusammen ein aus elastischem Federstahl bestehende rahmenartige Element 4. In Draufsicht auf die Bearbeitungseinheit 2 erkennt man, dass der rahmenartige Element 4 eine annähernd ovale Form mit zwei linearen Abschnitten aufweist.

Das Bodenbearbeitungsgerät umfasst ein erstes, beweglich ausgebildetes Stellmittel 18.L und ein zweites, beweglich ausgebildetes Stellmittel 18.R. Das erste Stellmittel 18.L ist durch das Gestängeteil 7.L.1 im Bereich des ersten Teilelements 4.1 mit dem rahmenartigen Element 4 verbunden. Das zweite Stellmittel 18.R ist durch das Gestängeteil 7.R.1 im Bereich des dritten Teilelements 4.3 mit dem rahmenartigen Element 4 verbunden.

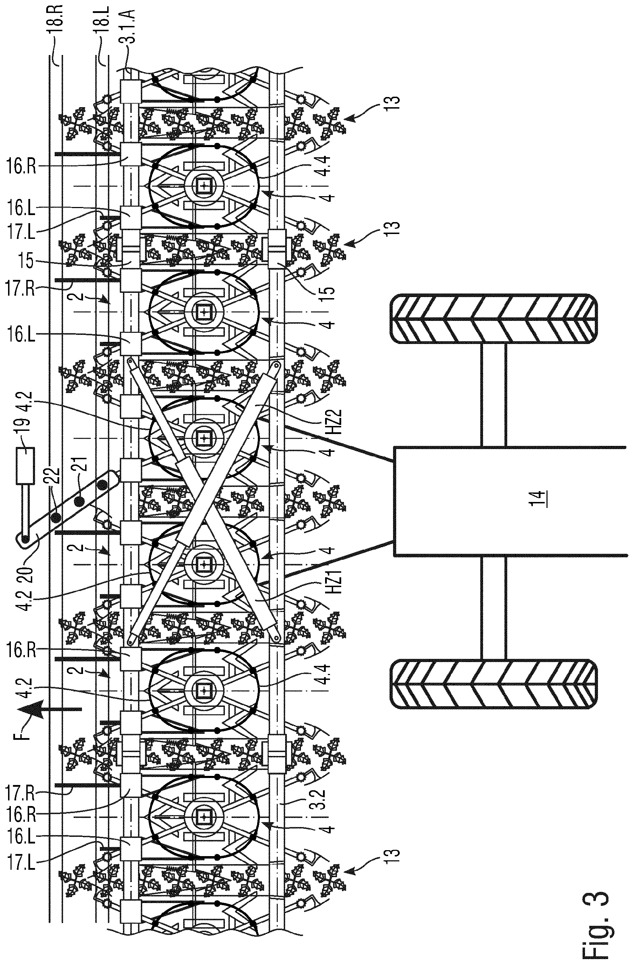

Durch eine nachfolgend im Zusammenhang mit der Figur 3 noch näher erläuterte antiparallele Bewegung des ersten Stellmittels 18.L und des zweiten Stellmittels 18.R werden die Gestängeteile 7.L.1, 7.R.1 entweder aufeinander zu oder voneinander weg bewegt. Dadurch wird das rahmenartige Element 4 insbesondere im Bereich der gebogenen Teilelemente 4.2, 4.4 deformiert, sodass sich die Ausdehnung des rahmenartigen Elements 4 quer zur Fahrtrichtung F verändert.

Die Bewegung des ersten 18.L und des zweiten Stellmittels 18.R wird durch eine über ein Bewegungsübertragungsmittel 20 auf die Stellmittel einwirkende Verstelleinheit 19 (siehe Figur 3) verursacht. Bei der Verstelleinheit 19 handelt es sich um einen mittels eines Steuergeräts ansteuerbaren hydraulischen Stellantrieb.

Die Bearbeitungseinheit 2 weist einen ersten 5.1 und einen zweiten Striegelzinken 5.2 auf, wobei der erste 5.1 und der zweite Striegelzinken 5.2 auf verschiedenen Seiten der Gassenmittellinie GML angeordnet sind. Der erste Striegelzinken 5.1 und der zweite Striegelzinken 5.2 sind jeweils über einen Draht 5.1.D, 5.2.D mit dem Rahmenrohr 3.2 verbunden. Durch Drehung des Rahmenrohres 3.2 werden die Drähte 5.1.D, 5.2.D um das Rahmenrohr gewickelt und eine entsprechende Zugkraft auf die Striegelzinken 5.1, 5.2 ausgeübt. Dadurch kann die Vorspannung der Striegelzinken 5.1, 5.2 eingestellt werden.

Der erste Striegelzinken 5.1 ist mit dem linearen ersten Teilelement 4.1 des rahmenartigen Elements 4 verbunden, während der zweite Striegelzinken 5.2 mit dem linearen dritten Teilelement 4.3 des rahmenartigen Elements 4 verbunden ist. Durch die Verbindung der Striegelzinken 5.1, 5.2 mit jeweils einem Teilelement des rahmenartigen Elements 4 kann eine Anpassung des Abstandes der beiden Striegelzinken 5.1, 5.2 voneinander vorgenommen werden. Dies bringt besondere Vorteile im Hinblick auf die Bekämpfung von Unkraut, das besonders nahe an den Kulturpflanzen wächst, da die Striegelzinken 5.1, 5.2 sehr nahe entlang der Reihe von Kulturpflanzen bewegt werden können. Eine Schädigung der Kulturpflanzen kann vermieden werden, da durch eine Veränderung der Breite des rahmenartigen Elements 4 eine exakte Positionierung der Striegelzinken relativ zu den Kulturpflanzen vorgenommen werden kann.

An der Bearbeitungseinheit 2 sind außerdem eine erste Hackschar 8.1, eine zweite Hackschar 8.2 und eine dritte Hackschar 8.3 angeordnet, wobei die zweite Hackschar 8.2 und die dritte Hackschar 8.3 auf verschiedenen Seiten der Gassenmittellinie (GML) angeordnet sind. Die Hackschare 8.1, 8.2, 8.3 sind sowohl in Fahrtrichtung F wie auch quer zur Fahrtrichtung F derart zueinander versetzt angeordnet, dass sie ein gleichschenkliges Dreieck bilden, wobei die im Bereich der Gassenmittellinie GML angeordnete erste Hackschar 8.1 die in Fahrtrichtung vorauseilende Spitze des gleichschenkligen Dreiecks bildet.

Aus der Figur 1 ist zu erkennen, dass die zweite Hackschar 8.2 und die dritte Hackschar 8.3 durch jeweils ein Verbindungsmittel 8.2.V, 8.3.V und durch jeweils ein weiteres Hilfsverbindungsmittel 9.H.L.V, 9.H.R.V mit dem vierten Teilelement 4.4 des rahmenartigen Elements 4 verbunden sind. Dabei sind die beiden Hackschare 8.2, 8.3 auf verschiedenen Seiten der Gassenmittellinie GML mit dem vierten Teilelement des rahmenartigen Elements 4 verbunden. Durch diese Verbindung der Hackschare 8.2, 8.3 mit dem vierten Teilelement 4.4 des rahmenartigen Elements 4 auf verschiedenen Seiten der Gassenmittellinie GML kann eine Anpassung des Abstandes der beiden Hackschare 8.2, 8.3 voneinander vorgenommen werden. Damit kann eine Anpassung der Breite des durch die Hackschare 8.1, 8.2, 8.3 bearbeiteten Bereiches zwischen den Reihen an Kulturpflanzen an die Gegebenheiten an einem spezifischen Einsatzort vorgenommen werden.

Die Bearbeitungseinheit 2 weist darüberhinaus eine erste Seche 9.V.L, eine zweite Seche 9.V.R, eine dritte Seche 9.H.R und eine vierte Seche 9.H.L auf, wobei die erste 9.V.L und die zweite Seche 9.V.R ein vorderes Sechenpaar 9.V.L, 9.V.R bilden und die dritte 9.H.R und die vierte Seche 9.H.L ein hinteres Sechenpaar 9.H.L, 9.H.R bilden. Dabei sind die beiden Sechen des vorderen Sechenpaares 9.V.R, 9.V.L auf verschiedenen Seiten der Gassenmittellinie GML angeordnet sind und die beiden Sechen des hinteren Sechenpaares 9.H.R, 9.H.L sind auf verschiedenen Seiten der Gassenmittellinie GML angeordnet sind.

Die erste Seche 9.V.L ist durch ein erstes Hilfsverbindungsmittel 9.V.L.V mit dem zweiten Teilelement 4.2 des rahmenartigen Elements 4 verbunden, während die zweite Seche 9.V.R durch ein zweites Hilfsverbindungsmittel 9.V.R.V ebenfalls mit dem zweiten Teilelement 4.2 des rahmenartigen Elements 4 verbunden ist. Dabei sind die beiden Sechen 9.V.L, 9.V.R auf verschiedenen Seiten der Gassenmittellinie GML mit dem zweiten Teilelement 4.2 des rahmenartigen Elements 4 verbunden. Durch diese Verbindung der Sechen 9.V.L, 9.V.R mit dem zweiten Teilelement 4.2 des rahmenartigen Elements 4 auf verschiedenen Seiten der Gassenmittellinie GML kann eine Anpassung des Abstandes der beiden Sechen 9.V.L, 9.V.R voneinander vorgenommen werden. Damit kann der Abstand der Sechen voneinander an die Breite des durch die Hackschare bearbeiteten Bereiches zwischen den Reihen an Kulturpflanzen angepasst werden.

Analog dazu ist dritte Seche 9.H.R durch ein erstes Hilfsverbindungsmittel 9.H.R.V mit dem vierten Teilelement 4.4 des rahmenartigen Elements 4 verbunden, während die vierte Seche 9.H.L durch ein viertes Hilfsverbindungsmittel 9.H.L.V ebenfalls mit dem vierten Teilelement 4.4 des rahmenartigen Elements 4 verbunden ist. Dabei sind die beiden Sechen 9.H.L, 9.H.R auf verschiedenen Seiten der Gassenmittellinie GML mit dem vierten Teilelement 4.4 des rahmenartigen Elements 4 verbunden. Durch diese Verbindung der Sechen 9.H.L, 9.H.R mit dem vierten Teilelement 4.4 des rahmenartigen Elements 4 auf verschiedenen Seiten der Gassenmittellinie GML kann eine Anpassung des Abstandes der beiden Sechen 9.H.L, 9.H.R voneinander vorgenommen werden. Damit kann der Abstand der Sechen voneinander an die Breite des durch die Hackschare bearbeiteten Bereiches zwischen den Reihen an Kulturpflanzen angepasst werden.

Die Hilfsverbindungsmittel 9.V.L.V, 9.V.R.V, 9.H.R.V, 9.H.L.V, durch die die einzelnen Sechen mit den Teilelementen 4.2, 4.4 des rahmenartigen Elements 4 verbunden sind, sind mit jeweils einem, zentral im rahmenartiges Element vorgesehenen Ring 10 verbunden. Dabei ist jeweils eine vordere Seche und eine hintere Seche, die auf verschiedenen Seiten der Gassenmittellinie angeordnet sind, mit einem Ring verbunden. Die Ringe sind relativ zueinander verdrehbar ausgebildet, wodurch die zur Veränderung des Abstandes zwischen den Sechen eines Sechenpaares erforderliche Beweglichkeit sichergestellt wird.

Die beiden Ringe sind um einen vertikal ausgerichteten Stützfuß 11 gelegt, welcher ein jeweils einer Bearbeitungseinheit zugeordnetes Tiefenführungsrad 12 vertikal verschiebbar an dem Bodenbearbeitungsgerät befestigt.

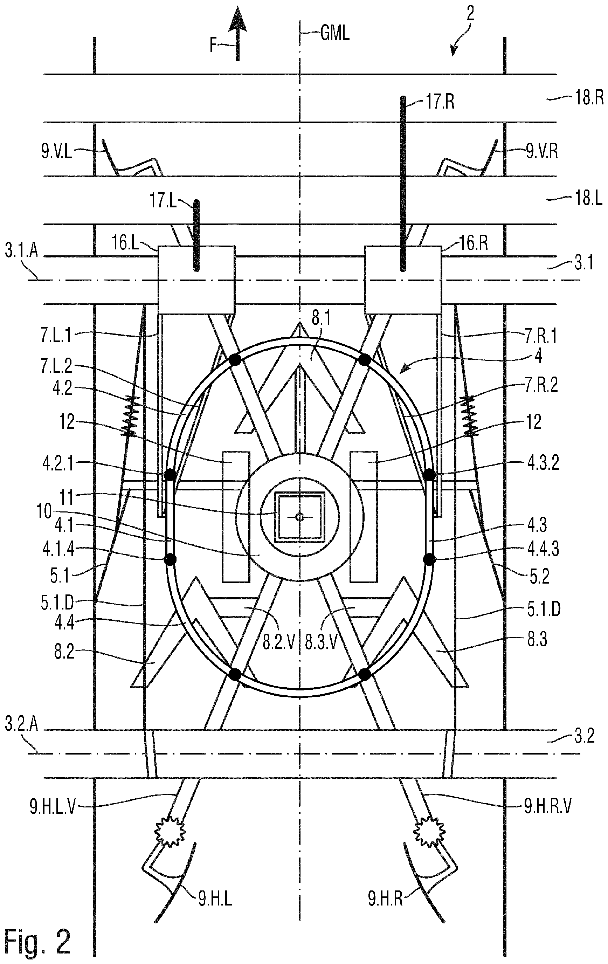

Die Figur 2 zeigt in schematischer Darstellung eine Draufsicht auf eine weitere Ausführungsform einer Bearbeitungseinheit 2 eines Bodenbearbeitungsgerätes für die mechanische Unkrautbekämpfung zwischen Reihen von Kulturpflanzen gemäß der Erfindung. Das Bodenbearbeitungsgerät weist einen an einer Zugmaschine befestigbaren Rahmen zum Bewegen entlang einer Fahrtrichtung F auf, wobei der Rahmen lediglich durch das Rahmenrohr 3.2 angedeutet ist. Weitere Elemente des Rahmens sind für die Beschreibung der Erfindung nicht notwendig und daher in der Figur nicht gezeigt. Das Rahmenrohr 3.2 weist eine Längsachse 3.2.A auf, wobei die Längsachse 3.2.A quer zur Fahrtrichtung F angeordnet ist.

In dem in Figur 2 gezeigten Ausführungsbeispiel erfolgt die Bodenbearbeitung in einer Gasse zwischen zwei Reihen von Kulturpflanzen, wobei die Gasse eine parallel zur Fahrtrichtung F definierte Gassenmittellinie GML aufweist. Wie bereits erwähnt ist es aber auch möglich, eine Bodenbearbeitung links und rechts neben einer Reihe von Kulturpflanzen durchzuführen. In diesem Fall muss aber die nachfolgend noch näher beschriebene erste Hackschare 8.1 entfernt werden.

Die Bearbeitungseinheit 2 weist ein aus einem ersten 4.1, einem zweiten 4.2, einem dritten 4.3 und einem vierten Teilelement 4.4 aufgebautes rahmenartiges Element 4 auf, wobei das erste 4.1 und das dritte Teilelement 4.3 aus einem linearen Stück Federstahl gebildet sind, während das zweite 4.2 und das vierte Teilelement 4.4 aus einem U-förmig gebogenen Stück Federstahl besteht. Die einzelnen Teilelemente sind fest miteinander verbunden und bilden zusammen ein aus elastischem Federstahl bestehende rahmenartige Element 4. In Draufsicht auf die Bearbeitungseinheit 2 erkennt man, dass der rahmenartige Element 4 eine annähernd ovale Form mit zwei linearen Abschnitten aufweist.

Die Bearbeitungseinheit 2 weist ein quer zur Fahrtrichtung F angeordnetes Rohr 3.1 auf, wobei an dem Rohr 3.1 eine erste Führungshülse 16.L und eine zweite Führungshülse 16.R angeordnet sind. Die erste Führungshülse 16.L ist an ihrer Außenseite mit einem ersten Kraftübertragungsmittel 17.L in Form eines ersten länglichen Gestängeteils und die zweite Führungshülse 16.R ist an ihrer Außenseite mit einem zweiten Kraftübertragungsmittel 17.R in Form eines zweiten länglichen Gestängeteils ausgestattet. Erstes und zweites Gestängeteil weisen unterschiedliche Längen auf.

Die erste Führungshülse 16.L ist durch zwei Gestängeteile 7.L.1, 7.L.2 im Bereich des ersten Teilelements 4.1 mit dem rahmenartigen Element 4 verbunden, während die zweite Führungshülse 16.R durch zwei Gestängeteile 7.R.1, 7.R.2 im Bereich des dritten Teilelements 4.3 mit dem rahmenartigen Element 4 verbunden ist.

Das Bodenbearbeitungsgerät umfasst ein erstes, beweglich ausgebildetes Stellmittel 18.L, wobei das erste Stellmittel 18.L fest mit dem ersten Kraftübertragungsmittel 17.L verbunden ist, und ein zweites, beweglich ausgebildetes Stellmittel 18.R, wobei das zweite Stellmittel 18.R fest mit dem zweiten Kraftübertragungsmittel 17.R verbunden ist.

Durch eine nachfolgend im Zusammenhang mit der Figur 3 noch näher erläuterte antiparallele Bewegung des ersten Stellmittels 18.L und des zweiten Stellmittels 18.R werden die Führungshülsen 16.L, 16.R entweder aufeinander zu oder voneinander weg bewegt. Dadurch wird das rahmenartige Element 4 insbesondere im Bereich der gebogenen Teilelemente 4.2, 4.4 deformiert, sodass sich die Ausdehnung des rahmenartigen Elements 4 quer zur Fahrtrichtung F verändert.

Die Bewegung des ersten 18.L und des zweiten Stellmittels 18.R wird durch eine über ein Bewegungsübertragungsmittel 20 auf die Stellmittel einwirkende Verstelleinheit 19 (siehe Figur 3) verursacht. Bei der Verstelleinheit 19 handelt es sich um einen mittels eines Steuergeräts ansteuerbaren hydraulischen Stellantrieb.

Die Bearbeitungseinheit 2 weist einen ersten 5.1 und einen zweiten Striegelzinken 5.2 auf, wobei der erste 5.1 und der zweite Striegelzinken 5.2 auf verschiedenen Seiten der Gassenmittellinie GML angeordnet sind. Der erste Striegelzinken 5.1 und der zweite Striegelzinken 5.2 sind jeweils über einen Draht 5.1.D, 5.2.D mit dem Rahmenrohr 3.2 verbunden. Durch Drehung des Rahmenrohres 3.2 werden die Drähte 5.1.D, 5.2.D um das Rahmenrohr gewickelt und eine entsprechende Zugkraft auf die Striegelzinken 5.1, 5.2 ausgeübt. Dadurch kann die Vorspannung der Striegelzinken 5.1, 5.2 eingestellt werden.

Der erste Striegelzinken 5.1 ist mit dem linearen ersten Teilelement 4.1 des rahmenartigen Elements 4 verbunden, während der zweite Striegelzinken 5.2 mit dem linearen dritten Teilelement 4.3 des rahmenartigen Elements 4 verbunden ist. Durch die Verbindung der Striegelzinken 5.1, 5.2 mit jeweils einem Teilelement des rahmenartigen Elements 4 kann eine Anpassung des Abstandes der beiden Striegelzinken 5.1, 5.2 voneinander vorgenommen werden. Dies bringt besondere Vorteile im Hinblick auf die Bekämpfung von Unkraut, das besonders nahe an den Kulturpflanzen wächst, da die Striegelzinken 5.1, 5.2 sehr nahe entlang der Reihe von Kulturpflanzen bewegt werden können. Eine Schädigung der Kulturpflanzen kann vermieden werden, da durch eine Veränderung der Breite des rahmenartigen Elements 4 eine exakte Positionierung der Striegelzinken relativ zu den Kulturpflanzen vorgenommen werden kann.

An der Bearbeitungseinheit 2 sind außerdem eine erste Hackschar 8.1, eine zweite Hackschar 8.2 und eine dritte Hackschar 8.3 angeordnet, wobei die zweite Hackschar 8.2 und die dritte Hackschar 8.3 auf verschiedenen Seiten der Gassenmittellinie (GML) angeordnet sind. Die Hackschare 8.1, 8.2, 8.3 sind sowohl in Fahrtrichtung F wie auch quer zur Fahrtrichtung F derart zueinander versetzt angeordnet, dass sie ein gleichschenkliges Dreieck bilden, wobei die im Bereich der Gassenmittellinie GML angeordnete erste Hackschar 8.1 die in Fahrtrichtung vorauseilende Spitze des gleichschenkligen Dreiecks bildet.

Aus der Figur 1 ist zu erkennen, dass die zweite Hackschar 8.2 und die dritte Hackschar 8.3 durch jeweils ein Verbindungsmittel 8.2.V, 8.3.V und durch jeweils ein weiteres Hilfsverbindungsmittel 9.H.L.V, 9.H.R.V mit dem vierten Teilelement 4.4 des rahmenartigen Elements 4 verbunden sind. Dabei sind die beiden Hackschare 8.2, 8.3 auf verschiedenen Seiten der Gassenmittellinie GML mit dem vierten Teilelement des rahmenartigen Elements 4 verbunden. Durch diese Verbindung der Hackschare 8.2, 8.3 mit dem vierten Teilelement 4.4 des rahmenartigen Elements 4 auf verschiedenen Seiten der Gassenmittellinie GML kann eine Anpassung des Abstandes der beiden Hackschare 8.2, 8.3 voneinander vorgenommen werden. Damit kann eine Anpassung der Breite des durch die Hackschare 8.1, 8.2, 8.3 bearbeiteten Bereiches zwischen den Reihen an Kulturpflanzen an die Gegebenheiten an einem spezifischen Einsatzort vorgenommen werden.

Die Bearbeitungseinheit 2 weist darüberhinaus eine erste Seche 9.V.L, eine zweite Seche 9.V.R, eine dritte Seche 9.H.R und eine vierte Seche 9.H.L auf, wobei die erste 9.V.L und die zweite Seche 9.V.R ein vorderes Sechenpaar 9.V.L, 9.V.R bilden und die dritte 9.H.R und die vierte Seche 9.H.L ein hinteres Sechenpaar 9.H.L, 9.H.R bilden. Dabei sind die beiden Sechen des vorderen Sechenpaares 9.V.R, 9.V.L auf verschiedenen Seiten der Gassenmittellinie GML angeordnet sind und die beiden Sechen des hinteren Sechenpaares 9.H.R, 9.H.L sind auf verschiedenen Seiten der Gassenmittellinie GML angeordnet sind.

Die erste Seche 9.V.L ist durch ein erstes Hilfsverbindungsmittel 9.V.L.V mit dem zweiten Teilelement 4.2 des rahmenartigen Elements 4 verbunden, während die zweite Seche 9.V.R durch ein zweites Hilfsverbindungsmittel 9.V.R.V ebenfalls mit dem zweiten Teilelement 4.2 des rahmenartigen Elements 4 verbunden ist. Dabei sind die beiden Sechen 9.V.L, 9.V.R auf verschiedenen Seiten der Gassenmittellinie GML mit dem zweiten Teilelement 4.2 des rahmenartigen Elements 4 verbunden. Durch diese Verbindung der Sechen 9.V.L, 9.V.R mit dem zweiten Teilelement 4.2 des rahmenartigen Elements 4 auf verschiedenen Seiten der Gassenmittellinie GML kann eine Anpassung des Abstandes der beiden Sechen 9.V.L, 9.V.R voneinander vorgenommen werden. Damit kann der Abstand der Sechen voneinander an die Breite des durch die Hackschare bearbeiteten Bereiches zwischen den Reihen an Kulturpflanzen angepasst werden.

Analog dazu ist dritte Seche 9.H.R durch ein erstes Hilfsverbindungsmittel 9.H.R.V mit dem vierten Teilelement 4.4 des rahmenartigen Elements 4 verbunden, während die vierte Seche 9.H.L durch ein viertes Hilfsverbindungsmittel 9.H.L.V ebenfalls mit dem vierten Teilelement 4.4 des rahmenartigen Elements 4 verbunden ist. Dabei sind die beiden Sechen 9.H.L, 9.H.R auf verschiedenen Seiten der Gassenmittellinie GML mit dem vierten Teilelement 4.4 des rahmenartigen Elements 4 verbunden. Durch diese Verbindung der Sechen 9.H.L, 9.H.R mit dem vierten Teilelement 4.4 des rahmenartigen Elements 4 auf verschiedenen Seiten der Gassenmittellinie GML kann eine Anpassung des Abstandes der beiden Sechen 9.H.L, 9.H.R voneinander vorgenommen werden. Damit kann der Abstand der Sechen voneinander an die Breite des durch die Hackschare bearbeiteten Bereiches zwischen den Reihen an Kulturpflanzen angepasst werden.

Die Hilfsverbindungsmittel 9.V.L.V, 9.V.R.V, 9.H.R.V, 9.H.L.V, durch die die einzelnen Sechen mit den Teilelementen 4.2, 4.4 des rahmenartigen Elements 4 verbunden sind, sind mit jeweils einem, zentral im rahmenartigen Element vorgesehenen Ring 10 verbunden. Dabei ist jeweils eine vordere Seche und eine hintere Seche, die auf verschiedenen Seiten der Gassenmittellinie angeordnet sind, mit einem Ring verbunden. Die Ringe sind relativ zueinander verdrehbar ausgebildet, wodurch die zur Veränderung des Abstandes zwischen den Sechen eines Sechenpaares erforderliche Beweglichkeit sichergestellt wird.

Die beiden Ringe sind um einen vertikal ausgerichteten Stützfuß 11 gelegt, welcher ein jeweils einer Bearbeitungseinheit zugeordnetes Tiefenführungsrad 12 vertikal verschiebbar an dem Bodenbearbeitungsgerät befestigt.

Figur 3 zeigt in schematischer Darstellung eine Draufsicht auf ein Bodenbearbeitungsgerät gemäß der Erfindung mit einer Zugmaschine 14. In der gezeigten Ausführungsform besteht das Bodenbearbeitungsgerät aus insgesamt zwölf Bearbeitungseinheiten 2, wovon sechs Bearbeitungseinheiten 2 vollständig und zwei weitere Bearbeitungseinheiten teilweise dargestellt sind. Jede dieser zwölf Bearbeitungseinheiten 2 ist wie im Zusammenhang mit der Figur 2 beschrieben aufgebaut. Das Rohr 3.1 und das Rahmenrohr 3.2 sind in jeweils drei Abschnitte unterteilt, die durch Kreuzgelenke 15 miteinander verbunden sind. An jedem der Abschnitte sind jeweils vier Bearbeitungseinheiten 2 vorgesehen. Der Rahmen ist lediglich durch das Rahmenrohr 3.2 angedeutet. Weitere Elemente des Rahmens sind für die Beschreibung der Erfindung nicht notwendig und daher in der Figur 3 nicht gezeigt.

An den beiden sich gegenüberliegenden Enden des Bodenbearbeitungsgerät ist jeweils eine abgewandelte Bearbeitungseinheit (nicht gezeigt) vorgesehen, welche lediglich an ihrer, den anderen Bearbeitungseinheiten zugewandten Seite Sechen, Striegelzinken und Hackschare aufweist. Die übrigen Elemente fehlen. Dadurch wird sichergestellt, dass die beiden äußersten Reihen der in dem jeweiligen Arbeitsgang bearbeiteten Kulturpflanzen von beiden Seiten her von Unkraut befreit werden. Die an diese äußere Reihe von Kulturpflanzen anschließende Gasse wird in zwei aufeinanderfolgenden Durchfahrten mit dem Bodenbearbeitungsgerät jeweils in dem auf einer Seite der Gassenmittellinie gelegenen Bereich bearbeitet.

Die zwei Hydraulikzylinder HZ1, HZ2 sind über Rahmenteile (nicht gezeigt) miteinander verbunden. Diese Hydraulikzylinder dienen der Anpassung der Stellung des Bodenbearbeitungsgerätes relativ zur Zugmaschine beim Arbeiten an einer Hanglage.

Die beiden äußeren Abschnitte des Bodenbearbeitungsgerätes können durch eine weitere Hydraulik (nicht dargestellt) in eine vertikale Position hochgeklappt werden, wodurch sich die Gesamtbreite des Bodenbearbeitungsgerätes um 2/3 verringert. Dadurch wird eine problemlose Fahrt der Zugmaschine mit Bodenbearbeitungsgerät auf öffentlichen Straßen möglich.

Wie aus Figur 3 hervorgeht, ist eine der Anzahl an Bearbeitungseinheiten 2 entsprechende Anzahl von rahmenartigen Elementen 4 vorgesehen. Das Rohr 3.1 weist daher zwölf erste Führungshülsen 16.L und zwölf zweite Führungshülsen 16.R auf, wobei jede der ersten Führungunghülsen 16.L über jeweils ein erstes Kraftübertragungsmittel 17.L mit dem ersten Stellmittel 18.L verbunden ist und jede der zweiten Führungunghülsen 16.R über jeweils ein zweites Kraftübertragungsmittel 17.R mit dem zweiten Stellmittel 18.R verbunden ist.

Durch die an dem Rohr 3.1 vorgesehenen Führungshülsen 16.L, 16.R und deren Verbindung mit dem ersten 4.1 und dem dritten Teilelement 4.3 des rahmenartigen Elements 4 wird erreicht, dass eine Bewegung der Führungshülsen 16.L, 16.R in eine Deformation des rahmenartigen Element 4 umgesetzt wird. Dabei wird die Bewegung der Führungshülsen 16.L, 16.R über die Gestängeteile 7.L.1, 7.L.2, 7.R.1, 7.R.2 auf das rahmenartige Element 4 übertragen, dessen elastische Eigenschaften eine Anpassung der Breite des rahmenartigen Elements 4 quer zur Fahrtrichtung F ermöglichen. Die Bewegung der Führungshülsen 16.L, 16.R wird durch die beiden Stellmittel 18.L, 18.R verursacht, von denen jeweils eines mit jeweils einer Führungshülse verbunden ist. Dabei wird die Bewegung der Stellmittel 18.L, 18.R über jeweils ein Kraftübertragungsmittel 17.L, 17.R auf die Führungshülsen 16.L, 16.R übertragen.

Die Änderung der Ausdehnung des rahmenartigen Elements 4 quer zur Fahrtrichtung F kann mit dem gezeigten Ausführungsbeispiel besonders einfach bewirkt werden, da die Bewegung der ersten Führungshülse 16.L und der zweiten Führungshülse 16.R in entgegengesetzter Richtung erfolgt. Wie aus Figur 3 hervorgeht, ist das Rohr 3.1, an dem die Führungshülsen 16.L, 16.R angebracht sind, quer zur Fahrtrichtung F angeordnet.

Dadurch wird die Bewegung der Führungshülsen 16.L, 16.R vollständig in eine Veränderung der Ausdehnung der rahmenartigen Elemente 4 quer zur Fahrtrichtung F übertragen.

Auch die Übertragung der Bewegung der Stellmittel 18.L, 18.R über die Kraftübertragungsmittel 17.L, 17.R auf die Führungshülsen 16.L, 16.R ist durch das gezeigten Ausführungsbeispiel besonders vorteilhaft verwirklicht. Bei dem ersten Stellmittel 18.L handelt es sich nämlich um ein erstes, quer zur Fahrtrichtung F beweglich ausgebildetes Stellmittel 18.L und bei dem zweiten Stellmittel 18.R handelt es sich um ein zweites, quer zur Fahrtrichtung F beweglich ausgebildetes Stellmittel 18.R. Dadurch kann die Bewegung der Stellmittel 18.L, 18.R über die Kraftübertragungsmittel 17.L, 17.R direkt und vollständig in eine quer zur Fahrtrichtung F orientierte Bewegung der ersten Führungshülsen 16.L und der zweiten Führungshülsen 16.R umgesetzt werden. Bewegt sich die jeweils ein Paar von Führungshülsen 16.L, 16.R aufeinander zu, so wird die Ausdehnung aller rahmenartigen Elemente 4 quer zur Fahrtrichtung F in gleicher Weise verringert. Bewegt sich jeweils ein Paar der Führungshülsen 16.L, 16.R voneinander weg, so wird die Ausdehnung aller rahmenartigen Elemente 4 quer zur Fahrtrichtung F in gleicher Weise vergrößert.

Die Bewegung der Stellmittel 18.L, 18.R wird durch die Verstelleinheit 19 verursacht, wobei durch die Bewegung des ersten und des zweiten Stellmittels 18.L, 18.R die erste Führungshülse 16.L und die zweite Führungshülse 16.R bewegt werden und durch die Bewegung der ersten 16.L und der zweiten Führungshülse 16.R die rahmenartigen Elemente 4 derartig deformiert werden, dass sich die Ausdehnung der rahmenartigen Elemente 4 quer zur Fahrtrichtung F verändert.

Mit Hilfe der mittels eines Steuergeräts ansteuerbaren Verstelleinheit 19 kann die Bewegung des ersten und des zweiten Stellmittels 18.L, 18.R von der Zugmaschine aus auch während der Bodenbearbeitung bewirkt werden. Die Breite rahmenartigen Elemente 4 kann damit bei Bedarf einfach und schnell an die jeweiligen Verhältnisse auf dem Acker angepasst werden, wobei der Bodenbearbeitungsvorgang nicht zu unterbrochen werden braucht.

Das Bewegungsübertragungsmittel 20 weist eine langgestreckte Form auf und ist an dem Drehpunkt 21 fest, aber drehbar mit dem Rahmen verbunden. Die Verstelleinheit 19 ist im Bereich eines Endes des langgestreckten Bewegungsübertragungsmittels 20 mit diesem verbunden. Eine durch die Verstelleinheit 19 verursachte Bewegung wird auf diese Weise in eine Drehung des Bewegungsübertragungsmittels 20 umgesetzt. In dem Fachmann bekannter Weise ist in diesem Fall die Verstelleinheit 19 schwenkbar am Rahmen gelagert und kann so der Auslenkung des Bewegungsübertragungsmittels 20 aufgrund von dessen Drehbewegung folgen. In dem Bewegungsübertragungsmittel 20 ist in dem Fachmann bekannter Weise zumindest ein Langloch 22 vorgesehen, in das eine Ausbuchtung oder ein Verbindungsmittel des zweiten Stellmittels 18.R eingreift. Aufgrund der Ausbildung als Langloch 22 kann das Bewegungsübertragungsmittel 20 eine Drehbewegung durchführen, ohne dass es zu einer Bewegung des Stellmittels 18.R in Fahrtrichtung F kommt.

Durch die Verstelleinheit 19 wird also eine lineare, quer zur Fahrtrichtung F orientierte Bewegung des ersten 18.L und des zweiten Stellmittels 18.R bewirkt, wobei die Bewegung des ersten Stellmittels 18.L antiparallel zur Bewegung des zweiten Stellmittels 18.R orientiert ist. Die Bewegung der Stellmittel 18.L, 18.R wird auf diese Weise direkt proportional in eine entsprechende Veränderung der Ausdehnung rahmenartigen Elemente 4 quer zur Fahrtrichtung F umgesetzt.

Bei der Verstelleinheit 19 kann es sich auch um ein händisch zu bedienendes Element handeln. Die Bewegung des ersten und des zweiten Stellmittels 18.L, 18.R kann in diesem Fall nicht von der Zugmaschine aus während der Bodenbearbeitung bewirkt werden. Vielmehr muss zur Anpassung der Breite der rahmenartigen Elemente 4 an die jeweiligen Verhältnisse auf dem Acker der Bodenbearbeitungsvorgang unterbrochen werden.

Das Bewegungsübertragungsmittel 20 kann in diesem Fall beispielsweise als Zahnrad ausgebildet sein, das in einem am ersten und am zweiten Stellmittel 18.L, 18.R als Zahnstange ausgebildeten Abschnitt eingreift. Durch eine Drehung des Zahnrads werden die beiden Stellmittel 18.L, 18.R in antiparallele Richtung bewegt. Die Drehung des Zahnrades kann durch händisches Verschwenkung beispielsweise eines hebelartigen Elements erfolgen, das fest mit der Drehachse des Zahnrades verbunden ist. Daneben kann ein Mittel zur Fixierung des hebelartigen Elements und damit des Zahnrades in einer bestimmten Position vorgesehen sein.

Auch durch diese Art von Verstelleinheit 19 wird eine lineare, quer zur Fahrtrichtung F orientierte Bewegung des ersten 18.L und des zweiten Stellmittels 18.R bewirkt, wobei die Bewegung des ersten Stellmittels 18.L antiparallel zur Bewegung des zweiten Stellmittels 18.R orientiert ist. Die Bewegung der Stellmittel 18.L, 18.R wird auf diese Weise direkt proportional in eine entsprechende Veränderung der Ausdehnung rahmenartigen Elemente 4 quer zur Fahrtrichtung F umgesetzt.

In der Figur 3 sind außerdem mehrere Reihen von Kulturpflanzen 13 dargestellt. Die Zugmaschine 14 bewegt das Bodenbearbeitungsgerät in Fahrtrichtung parallel zu den Reihen von Kulturpflanzen. Jeder Gasse zwischen zwei Reihen von Kulturpflanzen ist eine Bearbeitungseinheit 2 zugeordnet. Beim Einsatz des Bodenbearbeitungsgerätes schaffen die vorauseilenden vorderen Sechen Vertiefungen von mehreren Zentimetern im Boden. Die drei Hackschare werden in geringer Tiefe durch den Boden gezogen und durchschneiden dabei die Wurzeln des in der Gasse zwischen den Kulturpflanzen wuchernden Unkrauts. Die beiden Striegelzinken scharren den Boden nahe der Kulturpflanzen auf, wobei sie gleichzeitig die von den Hackschare abgelösten Erdschollen und -brocken zerkleinern und das Unkraut an die Erdoberfläche zu ziehen. Verfestigter Boden nahe den Kulturpflanzen wird dabei von den Striegelzinken aufgebrochen. Die beiden nachlaufenden Sechen bewegen Erdreich in Richtung der Kulturpflanzen, füllen damit die zunächst geschaffenen Vertiefungen wieder auf und häufeln Erde nahe den Kulturpflanzen an.

Da wie oben beschrieben jede der zwölf Bearbeitungseinheiten jeweils zwei Striegelzinken, drei Hackschare und vier Sechen aufweist, welche alle zusammen mit dem jeweiligen rahmenartigen Element bewegt werden, kann die komplette Bodenbearbeitung zwischen den Reihen von Kulturpflanzen an die spezifischen örtlichen Gegebenheiten angepasst werden. Sowohl der Abstand zwischen den Striegelzinken, wie auch der Abstand zwischen den Sechen und der Abstand zwischen den Hackscharen kann an den zu bearbeitenden Acker angepasst werden.

Wie bereits erwähnt ist an dem Rahmen eine Mehrzahl an Bearbeitungseinheiten 2 mit einer Mehrzahl an rahmenartigen Elementen 4 angeordnet, wobei das Rohr 3.1 eine auf die Anzahl an Bearbeitungseinheiten 2 abgestimmte Zahl von Führungshülsen 16.L, 16.R aufweist. Pro Bearbeitungseinheit 2 ist eine erste Führungshülse 16.L und eine zweite Führungshülse 16.R vorgesehen. Durch eine Bewegung des ersten Stellmittels 18.L und des zweiten Stellmittels 18.R werden die rahmenartigen Elemente 4 derart deformiert, dass sich die Ausdehnung der Mehrzahl an rahmenartigen Elementen 4 quer zur Fahrtrichtung F in identischer Weise verändert. Dadurch kann eine Mehrzahl an Gassen zwischen Reihen von Kulturpflanzen in einem Arbeitsgang gleichzeitig bearbeitet werden. Sämtliche ersten 16.L bzw. zweiten Führungshülsen 16.R werden synchron bewegt, wodurch sämtliche rahmenartigen Elemente 4 synchron deformiert werden. Auf eine vom Landwirt auf der Zugmaschine wahrgenommene Änderung der Bedingungen oder der Pflanzenart des Anbaugebiets kann dadurch unmittelbar mit einer entsprechenden Anpassung der Breite sämtlicher rahmenartigen Elemente reagiert werden.

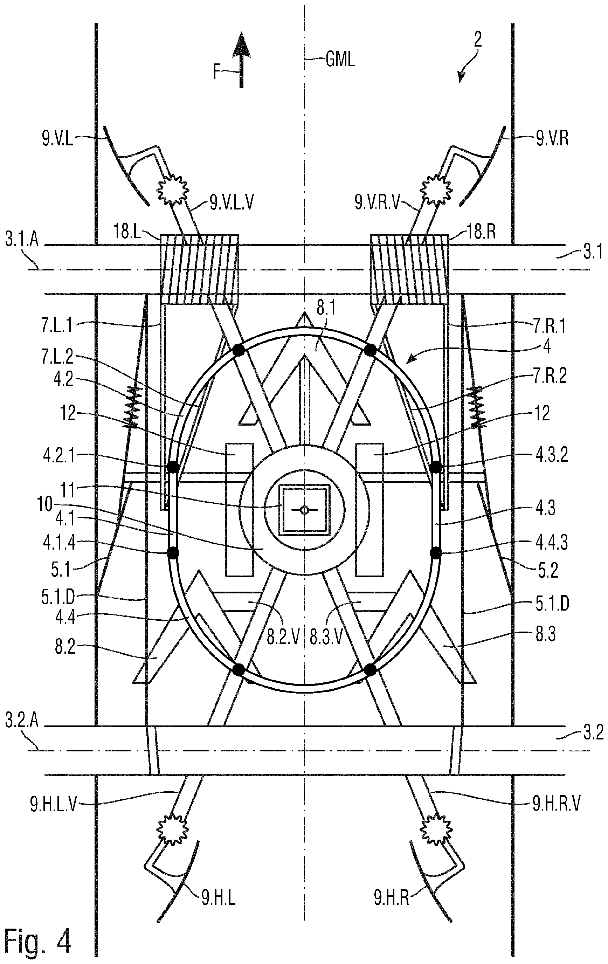

Die Figur 4 zeigt in schematischer Darstellung eine Draufsicht auf eine weitere Ausführungsform einer Bearbeitungseinheit 2 eines Bodenbearbeitungsgerätes für die mechanische Unkrautbekämpfung in Gassen zwischen Reihen von Kulturpflanzen gemäß der Erfindung. Die einzelnen Elemente des Ausführungsbeispiels entsprechend weitestgehend den Elementen des in der Figur 1 gezeigten Ausführungsbeispiels. Insofern wird auf die obigen Erläuterungen verwiesen.

Im Unterschied zu dem Ausführungsbeispiel gemäß Figur 1 weist das Rohr 3.3 der in Figur 4 dargestellten Bearbeitungseinheit 2 ein linksdrehendes und ein rechtsdrehendes Außengewinde auf, wobei das linksdrehende Außengewinde in Eingriff mit einer ein linksdrehendes Innengewinde aufweisenden ersten Gewindehülse 18.L steht, und das rechtsdrehende Außengewinde in Eingriff mit einer ein rechtsdrehendes Innengewinde aufweisenden zweiten Gewindehülse 18.R steht. Die Gewindehülsen 18.L, 18.R bilden in dem gezeigten Ausführungsbeispiel das erste 18.L und das zweite Stellmittel 18.R.

Die erste Gewindehülse 18.L ist durch zwei Gestängeteile 7.L.1, 7.L.2 im Bereich des ersten Teilelements 4.1 mit dem rahmenartigen Element 4 verbunden, während die zweite Gewindehülse 18.R durch zwei Gestängeteile 7.R.1, 7.R.2 im Bereich des dritten Teilelements 4.3 mit dem rahmenartigen Element 4 verbunden ist.

Bei einer Drehung des Rohres 3.3 um dessen Längsachse 3.3.A bewegen sich die Gewindehülsen 18.L, 18.R entweder aufeinander zu oder voneinander weg. Durch diese Bewegung wird das rahmenartige Element 4 derart deformiert, dass sich die Ausdehnung des rahmenartigen Elements 4 quer zur Fahrtrichtung F verändert.

Die Drehung des Rohres 3.3 um dessen Längsachse 3.3.A und damit die Bewegung der Stellmittel 18.L, 18.R wird durch eine dem Rohr 3.3 zugeordnete Verstelleinheit (nicht gezeigt) bewirkt, bei der es sich um einen mittels eines Steuergeräts ansteuerbaren hydraulischen Stellantrieb handelt.

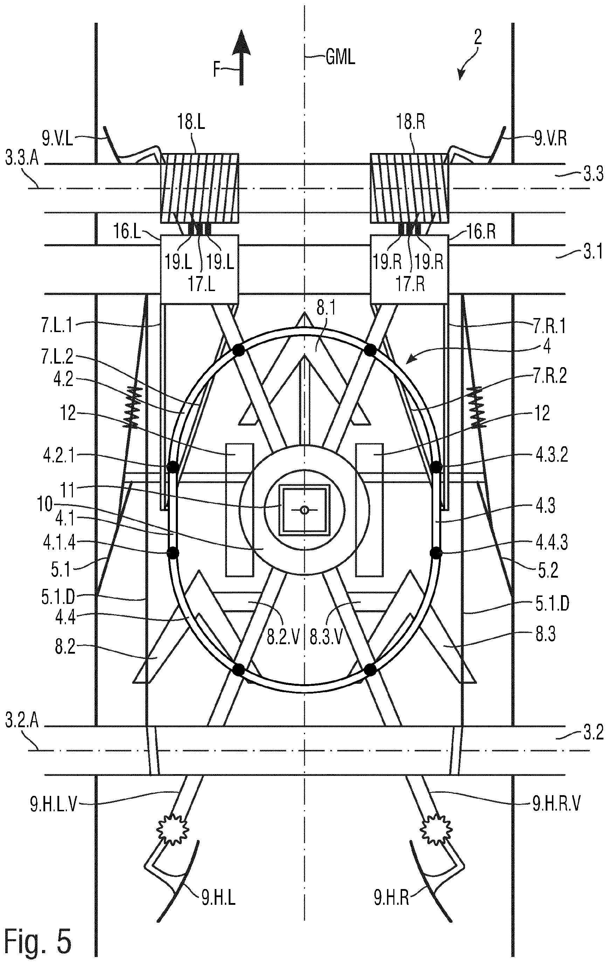

Die Figur 5 zeigt in schematischer Darstellung eine Draufsicht auf weitere Ausführungsform einer Bearbeitungseinheit 2 eines Bodenbearbeitungsgerätes für die mechanische Unkrautbekämpfung in Gassen zwischen Reihen von Kulturpflanzen gemäß der Erfindung.

Das Bodenbearbeitungsgerät entspricht weitgehend der im Zusammenhang mit der Figur 4 beschriebenen Ausführungsform. Im Gegensatz zur der in Figur 4 dargestellten Ausführungsform ist zusätzlich ein zweites, quer zur Fahrtrichtung F orientiertes Rohr 3.1 vorgesehen, wobei das Rohr 3.1 eine erste Führungshülse 16.L und eine zweite Führungshülse 16.R aufweist, wobei die erste Führungshülse 16.L und die zweite Führungshülse 16.R an ihrer Außenseite jeweils mit einer zapfenartigen Ausbuchtung 17.L, 17.R ausgestattet sind. Die erste Gewindehülse 18.L und die zweite Gewindehülse 18.R weisen an ihrer Außenseite jeweils ein gabelartiges Paar von Ausbuchtungen 19.L, 19.R auf, wobei die zapfenartige Ausbuchtung 17.L der ersten Führungshülse 16.L in Eingriff mit dem gabelartigen Paar von Ausbuchtungen 19.L der erste Gewindehülse 18.L steht und die zapfenartige Ausbuchtung 17.R der zweiten Führungshülse 16.R in Eingriff mit dem gabelartigen Paar von Ausbuchtungen 19.R der zweiten Gewindehülse 18.R steht.

Die erste Gewindehülse 18.L ist über die Führungshülse 16.L und die zwei Gestängeteile 7.L.1, 7.L.2 im Bereich des ersten Teilelements 4.1 mit dem rahmenartigen Element 4 verbunden, während die zweite Gewindehülse 18.R über die Führungshülse 16.R und die zwei Gestängeteile 7.R.1, 7.R.2 im Bereich des dritten Teilelements 4.3 mit dem rahmenartigen Element 4 verbunden ist.

Wie bei der in Figur 1 dargestellten Ausführungsform weist das Rohr 3.3 der Bearbeitungseinheit 2 ein linksdrehendes und ein rechtsdrehendes Außengewinde auf, wobei das linksdrehende Außengewinde in Eingriff mit der ein linksdrehendes Innengewinde aufweisenden ersten Gewindehülse 18.L steht, und das rechtsdrehende Außengewinde in Eingriff mit der ein rechtsdrehendes Innengewinde aufweisenden zweiten Gewindehülse 18.R steht.

Bei einer Drehung des Rohres 3.3 um dessen Längsachse 3.3.A bewegen sich die Gewindehülsen 18.L, 18.R entweder aufeinander zu oder voneinander weg. Durch diese Bewegung wird das rahmenartige Element 4 derart deformiert, dass sich die Ausdehnung des rahmenartigen Elements 4 quer zur Fahrtrichtung F verändert.

Die Drehung des Rohres 3.3 um dessen Längsachse 3.3.A und damit die Bewegung der Stellmittel 18.L, 18.R wird durch eine dem Rohr 3.3 zugeordnete Verstelleinheit (nicht gezeigt) bewirkt, bei der es sich um einen mittels eines Steuergeräts ansteuerbaren hydraulischen Stellantrieb handelt.

Im Gegensatz zu der in Figur 4 gezeigten Ausführungsform, bei der das Rohr 3.3 an der Bearbeitungseinheit 2 angeordnet ist und daher die durch Bodenunebenheiten verursachten vertikalen Bewegungen der Bearbeitungseinheit 2 mit ausführt, ist das Rohr 3.3 bei der Ausführungsform gemäß Figur 5 am Rahmen befestigt. Das die Eingriffsmittel aufweisende Rohr 3.3 führt gemäß dieser Ausführungsform die Auf- und Abbewegungen der Bearbeitungseinheit 2 nicht mit aus und wird daher wesentlich weniger beansprucht. Die durch Einsatz des erfindungsgemäßen Bodenbearbeitungsgerätes auf dem Acker verursachte Materialbeanspruchung insbesondere der Gewinde des Rohres 3.3 ist daher stark verringert.

Das Rohr 3.1 ist zwar als Teil der Bearbeitungseinheit 2 ausgeführt und führt daher die Auf- und Abbewegungen der Bearbeitungseinheit 2 aus, allerdings macht es die Verwendung der Führungshülsen 16.L, 16.R an dem Rohr 3.1 möglich, das Rohr 3.1 in hartverchromter Form auszuführen. Ein Verschleiß der Führungshülsen 16.L, 16.R ist daher nicht zu erwarten.

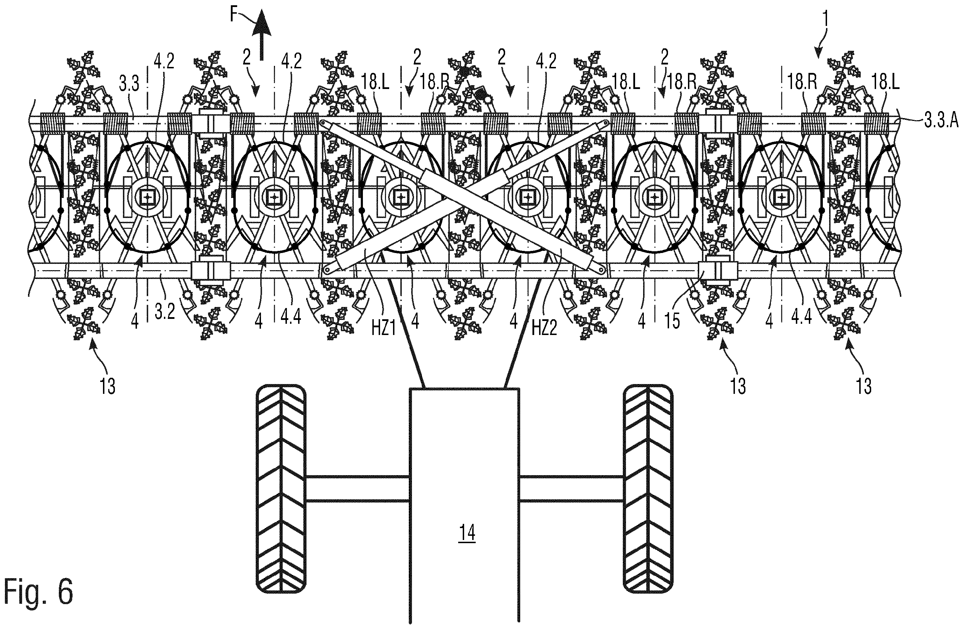

Figur 6 zeigt in schematischer Darstellung eine Draufsicht auf ein Bodenbearbeitungsgerät gemäß der Erfindung mit Zugmaschine 14. In der gezeigten Ausführungsform besteht das Bodenbearbeitungsgerät aus insgesamt zwölf Bearbeitungseinheiten 2, wovon sechs Bearbeitungseinheiten vollständig und zwei weitere Bearbeitungseinheiten teilweise dargestellt sind. Jede dieser zwölf Bearbeitungseinheiten 2 ist wie im Zusammenhang mit der Figur 4 beschrieben aufgebaut. Das Rohr 3.3 und das Rahmenrohr 3.2 sind in jeweils drei Abschnitte unterteilt, die durch Kreuzgelenke 15 miteinander verbunden sind. An jedem der Abschnitte sind jeweils vier Bearbeitungseinheiten 2 vorgesehen. Der Rahmen ist lediglich durch das Rahmenrohr 3.2 angedeutet. Weitere Elemente des Rahmens sind für die Beschreibung der Erfindung nicht notwendig und daher in der Figur 6 nicht gezeigt.

An den beiden sich gegenüberliegenden Enden des Bodenbearbeitungsgerät ist jeweils eine abgewandelte Bearbeitungseinheit (nicht gezeigt) vorgesehen, welche lediglich an ihrer, den anderen Bearbeitungseinheiten zugewandten Seite Sechen, Striegelzinken und Hackschare aufweist. Die übrigen Elemente fehlen. Dadurch wird sichergestellt, dass die beiden äußersten Reihen der in dem jeweiligen Arbeitsgang bearbeiteten Kulturpflanzen von beiden Seiten her von Unkraut befreit werden. Die an diese äußere Reihe von Kulturpflanzen anschließende Gasse wird in zwei aufeinanderfolgenden Durchfahrten mit dem Bodenbearbeitungsgerät jeweils in dem auf einer Seite der Gassenmittellinie gelegenen Bereich bearbeitet.

Die zwei Hydraulikzylinder HZ1, HZ2 sind über Rahmenteile (nicht gezeigt) miteinander verbunden. Diese Hydraulikzylinder dienen der Anpassung der Stellung des Bodenbearbeitungsgerätes relativ zur Zugmaschine beim Arbeiten an einer Hanglage.

Die beiden äußeren Abschnitte des Bodenbearbeitungsgerätes können durch eine weitere Hydraulik (nicht dargestellt) in eine vertikale Position hochgeklappt werden, wodurch sich die Gesamtbreite des Bodenbearbeitungsgerätes um 2/3 verringert. Dadurch wird eine problemlose Fahrt der Zugmaschine mit Bodenbearbeitungsgerät auf öffentlichen Straßen möglich.

Wie aus Figur 6 hervorgeht, ist eine der Anzahl an Bearbeitungseinheiten 2 entsprechende Anzahl von rahmenartigen Elementen 4 vorgesehen. Das Rohr 3.3 weist daher zwölf linksdrehende und zwölf rechtsdrehende Außengewinde auf, wobei jedes der linksdrehenden Außengewinde in Eingriff mit jeweils einer, ein linksdrehendes Innengewinde aufweisenden ersten Gewindehülse 18.L steht, und jedes der rechtsdrehenden Außengewinde in Eingriff mit jeweils einer, ein rechtsdrehendes Innengewinde aufweisenden zweiten Gewindehülse 18.R. Durch eine Drehung des Rohres 3.3 um dessen Längsachse 3.3.A werden die rahmenartigen Elemente 4 derart deformiert, dass sich die Ausdehnung der zwölf rahmenartigen Elemente 4 quer zur Fahrtrichtung F in gleicher Weise verändert.

Dargestellt sind mehrere Reihen von Kulturpflanzen 13. Die Zugmaschine 14 bewegt das Bodenbearbeitungsgerät in Fahrtrichtung parallel zu den Reihen von Kulturpflanzen. Jeder Gasse zwischen zwei Reihen von Kulturpflanzen ist eine Bearbeitungseinheit 2 zugeordnet. Beim Einsatz des Bodenbearbeitungsgerätes schaffen die vorauseilenden vorderen Sechen Vertiefungen von mehreren Zentimetern im Boden. Die drei Hackschare werden in geringer Tiefe durch den Boden gezogen und durchschneiden dabei die Wurzeln des in der Gasse zwischen den Kulturpflanzen wuchernden Unkrauts. Die beiden Striegelzinken scharren den Boden nahe der Kulturpflanzen auf, wobei sie gleichzeitig die von den Hackschare abgelösten Erdschollen und -brocken zerkleinern und das Unkraut an die Erdoberfläche zu ziehen. Verfestigter Boden nahe den Kulturpflanzen wird dabei von den Striegelzinken aufgebrochen. Die beiden nachlaufenden Sechen bewegen Erdreich in Richtung der Kulturpflanzen, füllen damit die zunächst geschaffenen Vertiefungen wieder auf und häufeln Erde nahe den Kulturpflanzen an.

Da wie oben beschrieben jede der zwölf Bearbeitungseinheiten jeweils zwei Striegelzinken, drei Hackschare und vier Sechen aufweist, welche alle zusammen mit dem jeweiligen rahmenartigen Element bewegt werden, kann die komplette Bodenbearbeitung zwischen den Reihen von Kulturpflanzen an die spezifischen örtlichen Gegebenheiten angepasst werden. Sowohl der Abstand zwischen den Striegelzinken, wie auch der Abstand zwischen den Sechen und der Abstand zwischen den Hackscharen kann an den zu bearbeitenden Acker angepasst werden.

Mit Hilfe des mittels eines Steuergeräts ansteuerbaren hydraulischen Stellantriebs kann die Drehung des die Außengewinde aufweisenden Rahmenrohres von der Zugmaschine aus auch während der Bodenbearbeitung erfolgen. Die Breite der rahmenartigen Elemente kann damit bei Bedarf einfach und schnell an die jeweiligen Verhältnisse auf dem Acker angepasst werden, wobei der Bodenbearbeitungsvorgang nicht zu unterbrochen werden braucht.

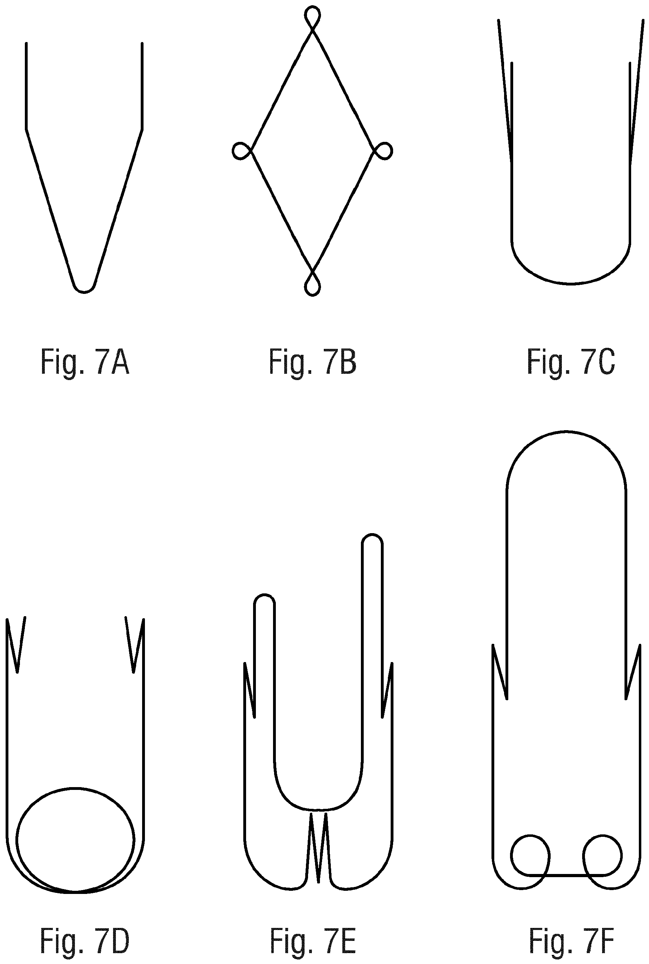

Die Ausführungsbeispiele der Figuren 1 bis 6 zeigen alle ein aus einem ersten 4.1, einem zweiten 4.2, einem dritten 4.3 und einem vierten Teilelement 4.4 aufgebautes rahmenartiges Element 4 auf, wobei das erste 4.1 und das dritte Teilelement 4.3 aus einem linearen Stück Federstahl gebildet sind, während das zweite 4.2 und das vierte Teilelement 4.4 aus einem U-förmig gebogenen Stück Federstahl besteht. Die einzelnen Teilelemente sind fest miteinander verbunden und bilden zusammen ein aus elastischem Federstahl bestehende rahmenartige Element 4. Diese Art von rahmenartigem Element 4 weist eine annähernd ovale Form mit zwei linearen Abschnitten auf. In den Figuren 7A, 7B, 7C, 7D, 7E und 7F sind weitere Beispiele rahmenartiger Elemente 4 gezeigt, wobei die Figuren 7A, 7C und 7E offene Elemente 4 zeigen, während in den Figuren 7B, 7D und 7F geschlossene Ausführungsformen gezeigt sind.

Die Figuren 7A, 7B, 7C, 7D, 7E und 7F verdeutlichen, dass im Hinblick auf die konkrete Ausgestaltung des rahmenartigen Elements 4 sehr viele Variationsmöglichkeiten bestehen. Gemeinsam haben alle rahmenartigen Elemente, dass sie aus einem elastischen Material gefertigt sind und das sie bei Krafteinwirkung derart elastisch deformierbar sind, dass sich die Ausdehnung des rahmenartigen Elements quer zur Fahrtrichtung verändert.

### Bezugszeichenliste

- 2: Bearbeitungseinheit
- 3.1: Rohr
- 3.2: Rahmenrohr
- 3.1. A: Längsachse des Rohres
- 3.2.A: Längsachse des Rahmenrohres
- 4: rahmenartiges Element
- 4.1: erstes Teilelement des rahmenartigen Elements
- 4.2: zweites Teilelement des rahmenartigen Elements
- 4.3: drittes Teilelement des rahmenartigen Elements
- 4.4: viertes Teilelement des rahmenartigen Elements
- 4.1.4: erstes Fixierelement
- 4.2.1: zweites Fixierelement
- 4.3.2: drittes Fixierelement
- 4.4.3: viertes Fixierelement
- 5.1: erster Striegelzinken
- 5.2: zweiter Striegelzinken
- 5.1. D, 5.2.D: Drähte
- 7.L.1, 7.L.2: Gestängeteile
- 7.R.1, 7.R.2: Gestängeteile
- 8.1: erste Hackschar
- 8.2: zweite Hackschar
- 8.3: dritte Hackschar
- 8.2.V, 8.3.V: Verbindungsmittel
- 9.V.L: erste Seche
- 9.V.R: zweite Seche
- 9.H.R: dritte Seche
- 9.H.L: vierte Seche
- 9.V.L.V: erstes Hilfsverbindungsmittel
- 9.V.R.V: zweites Hilfsverbindungsmittel
- 9.H.R.V: drittes Hilfsverbindungsmittel
- 9.H.L.V: viertes Hilfsverbindungsmittel
- 10: Ring
- 11: Stützfuß
- 12: Tiefenführungsrad
- 13: Kulturpflanzen
- 14: Zugmaschine
- 15: Kreuzgelenk
- 16.L: erste Führungshülse
- 16.R: zweite Führungshülse
- 17.L: erstes Kraftübertragungsmittel
- 17.R: zweites Kraftübertragungsmittel
- 18.L: erstes Stellmittel
- 18.R: zweites Stellmittel
- 19: Verstelleinheit
- 20: Bewegungsübertragungsmittel
- 21: Drehpunkt
- 22: Langloch
- GML: Gassenmittellinie
- F: Fahrtrichtung
- HZ1, HZ2: Hydraulikzylinder

## Patentansprüche

1. Bodenbearbeitungsgerät für die mechanische Unkrautbekämpfung zwischen Reihen von Kulturpflanzen, aufweisend
- einen an einer Zugmaschine befestigbaren Rahmen zum Bewegen entlang einer Fahrtrichtung (F),
- zumindest eine, an dem Rahmen befestigte Bearbeitungseinheit (2), wobei die zumindest eine Bearbeitungseinheit (2) ein aus einem elastischen Material bestehendes rahmenartiges Element (4) aufweist,
- ein erstes, beweglich ausgebildetes Stellmittel (18.L), wobei das erste Stellmittel (18.L) über zumindest ein erstes Verbindungselement (7.L.1) mit dem rahmenartigen Element (4) verbunden ist, und ein zweites, beweglich ausgebildetes Stellmittel (18.R), wobei das zweite Stellmittel (18.R) über zumindest ein zweites Verbindungselement (7.R.1) mit dem rahmenartigen Element (4) verbunden ist,
- zumindest eine Verstelleinheit (19) zum Ausführen einer Bewegung des ersten (18.L) und des zweiten Stellmittels (18.R), wobei durch die Bewegung des ersten (18.L) und des zweiten Stellmittels (18.R) das rahmenartige Element (4) derart elastisch deformierbar ist, dass sich die Ausdehnung des rahmenartigen Elements (4) quer zur Fahrtrichtung (F) verändert.

2. Bodenbearbeitungsgerät nach Anspruch 1, **dadurch gekennzeichnet, dass** es sich bei dem elastischen Material um ein Elastomer, einen Thermoplast, einen Gummi, insbesondere Hartgummi, oder um Stahl, insbesondere Federstahl, handelt.

3. Bodenbearbeitungsgerät nach Anspruch 1 oder 2, **dadurch gekennzeichnet, dass** das rahmenartige Element (4) einstückig oder aus mehreren, relativ zueinander unbeweglich und fest miteinander verbundenen Teilelementen (4.1, 4.2, 4.3, 4.4) aufgebaut ist.

4. Bodenbearbeitungsgerät nach einem der Ansprüche 1 bis 3, **dadurch gekennzeichnet, dass** das rahmenartige Element (4) offen oder geschlossen ausgebildet ist.

5. Bodenbearbeitungsgerät nach einem der Ansprüche 1 bis 4, **dadurch gekennzeichnet, dass** das rahmenartige Element (4) in einer Ebene verläuft, wobei das rahmenartige Element (4) bevorzugt zumindest eine Schlaufe aufweist, wobei die Schlaufe in der Ebene des rahmenartigen Elements oder senkrecht zur Ebene des rahmenartigen Elements verläuft.

6. Bodenbearbeitungsgerät nach einem der Ansprüch 1 bis 5, **dadurch gekennzeichnet, dass** das erste Verbindungselement (7.L.1) mit zumindest einem Gelenk ausgestattet ist und das zweite Verbindungselement (7.R.1) mit zumindest einem Gelenk ausgestattet ist.

7. Bodenbearbeitungsgerät nach einem der Ansprüche 1 bis 6, **dadurch gekennzeichnet, dass** ein quer zur Fahrtrichtung (F) angeordnetes Rohr (3.1) vorgesehen ist, wobei das Rohr (3.1) zumindest eine erste Führungshülse (16.L) und eine zweite Führungshülse (16.R) aufweist, wobei die erste Führungshülse (16.L) an ihrer Außenseite mit einem ersten Kraftübertragungsmittel (17.L) und die zweite Führungshülse (16.R) an ihrer Außenseite mit einem zweiten Kraftübertragungsmittel (17.R) ausgestattet ist, wobei die Verbindung des ersten, beweglich ausgebildeten Stellmittels (18.L) mit dem rahmenartigen Element (4) dadurch ausgebildet ist, dass das erste, beweglich ausgebildete Stellmittel (18.L) über das erste Kraftübertragungsmittel (17.L) mit der ersten Führungshülse (16.L) verbunden ist und die erste Führungshülse (16.L) über das erste Verbindungselement (7.L.1) mit dem rahmenartigen Element (4) verbunden ist, und wobei die Verbindung des zweiten, beweglich ausgebildeten Stellmittels (18.R) mit dem rahmenartigen Element (4) dadurch ausgebildet ist, dass das zweite, beweglich ausgebildete Stellmittel (18.R) über das zweite Kraftübertragungsmittel (17.R) mit der zweiten Führungshülse (16.R) verbunden ist und die zweite Führungshülse (16.R) über das zweite Verbindungselement (7.R.1) mit dem rahmenartigen Element (4) verbunden ist, wobei es sich bei dem ersten (17.L) und bei dem zweiten Kraftübertragungsmittel (17.R) bevorzugt um ein erstes und ein zweites Gestängeteil handelt, wobei erstes und zweites Gestängeteil unterschiedliche Längen aufweisen.

8. Bodenbearbeitungsgerät nach Anspruch 7, **dadurch gekennzeichnet, dass** es sich bei dem ersten (17.L) und bei dem zweiten Kraftübertragungsmittel (17.R) um jeweils eine zapfenartige Ausbuchtung an der Außenseite der ersten Führungshülse (16.L) und an der Außenseite der zweiten Führungshülse (16.R) handelt, wobei das erste Stellmittel (18.L) und das zweite Stellmittel (18.R) an ihrer Außenseite jeweils ein gabelartiges Paar von Ausbuchtungen (19.L, 19.R) aufweist, wobei die zapfenartige Ausbuchtung der ersten Führungshülse (16.L) in Eingriff mit dem gabelartigen Paar von Ausbuchtungen (19.L) des ersten Stellmittels (18.L) steht und die zapfenartige Ausbuchtung der zweiten Führungshülse (16.R) in Eingriff mit dem gabelartigen Paar von Ausbuchtungen (19.R) des zweiten Stellmittels (18.R) steht.

9. Bodenbearbeitungsgerät nach einem der Ansprüche 1 bis 8, **dadurch gekennzeichnet, dass** durch die Verstelleinheit (19) eine lineare, quer zur Fahrtrichtung orientierte Bewegung des ersten (18.L) und des zweiten Stellmittels (18.R) bewirkbar ist, wobei die Bewegung des ersten Stellmittels (18.L) antiparallel zur Bewegung des zweiten Stellmittels (18.R) orientiert bewirkbar ist, wobei es sich bei der Verstelleinheit (19) bevorzugt um einen mittels eines Steuergeräts ansteuerbaren elektrischen oder hydraulischen Stellantrieb handelt.

10. Bodenbearbeitungsgerät nach einem der Ansprüche 1 bis 9, **dadurch gekennzeichnet, dass** an dem Rahmen eine Mehrzahl an Bearbeitungseinheiten (2) mit einer Mehrzahl an rahmenartigen Elementen (4) angeordnet ist.

11. Bodenbearbeitungsgerät nach Anspruch 10, **dadurch gekennzeichnet, dass** durch eine Bewegung des ersten (18.L) und des zweiten Stellmittels (18.R) die Mehrzahl an rahmenartigen Elementen (4) derart deformiert werden, dass sich die Ausdehnung der rahmenartigen Elemente (4) quer zur Fahrtrichtung (F) in gleicher Weise verändert.

12. Bodenbearbeitungsgerät nach einem der Ansprüche 1 bis 11, **dadurch gekennzeichnet, dass** jede Bearbeitungseinheit (2) einen ersten (5.1) und einen zweiten Striegelzinken (5.2) aufweist, wobei der erste (5.1) und der zweite Striegelzinken (5.2) mit dem rahmenartigen Element (4) der jeweiligen Bearbeitungseinheit (2) verbunden ist.

13. Bodenbearbeitungsgerät nach einem der Ansprüche 1 bis 12, **dadurch gekennzeichnet, dass** jede Bearbeitungseinheit (2) eine erste Hackschar (8.1), eine zweite Hackschar (8.2) und eine dritte Hackschar (8.3) aufweist, wobei die erste (8.1), zweite (8.2) und dritte Hackschare (8.3) in Fahrtrichtung (F) und quer zur Fahrtrichtung (F) derart zueinander versetzt angeordnet sind, dass die Hackschare (8.1, 8.2, 8.3) ein gleichschenkliges Dreieck bilden, wobei die erste Hackschar (8.1) die in Fahrtrichtung (F) vorauseilende oder nacheilende Spitze des gleichschenkligen Dreiecks bildet, wobei die zweite (8.2) und die dritte Hackschar (8.3) durch ein oder mehrere Verbindungsmittel (8.2.V, 8.3.V) mit dem rahmenartigen Element (4) der jeweiligen Bearbeitungseinheit (2) verbunden sind.

14. Bodenbearbeitungsgerät nach einem der Ansprüche 1 bis 13, **dadurch gekennzeichnet, dass** an jeder Bearbeitungseinheit (2) eine erste Seche (9.V.L), eine zweite Seche (9.V.R), eine dritte Seche (9.H.R) und eine vierte Seche (9.H.L) angeordnet ist, wobei jeweils die erste (9.V.L) und die zweite Seche (9.V.R) ein vorderes Sechenpaar (9.V.L, 9.V.R) bilden und jeweils die dritte (9.H.R) und die vierte Seche (9.H.L) ein hinteres Sechenpaar (9.H.L, 9.H.R) bilden, wobei die erste Seche (9.V.L) durch ein erstes Hilfsverbindungsmittel (9.V.L.V) mit dem rahmenartigen Element (4) verbunden ist, die zweite Seche (9.V.R) durch ein zweites Hilfsverbindungsmittel (9.V.R.V) mit dem rahmenartigen Element (4) verbunden ist, die dritte Seche (9.H.R) durch ein drittes Hilfsverbindungsmittel (9.H.R.V) mit dem rahmenartigen Element (4) verbunden ist und die vierte Seche (9.H.L) durch ein viertes Hilfsverbindungsmittel (9.H.L.V) mit dem rahmenartigen Element (4) verbunden ist.

15. Bodenbearbeitungsgerät nach einem der Ansprüche 1 bis 14, **dadurch gekennzeichnet, dass** zumindest ein Bewegungsübertragungsmittel (20) vorgesehen ist, wobei die zumindest eine Verstelleinheit (19) zum Ausführen einer Bewegung des ersten (18.L) und des zweiten Stellmittels (18.R) über das zumindest eine Bewegungsübertragungsmittel (20) mit dem ersten Stellmittel (18.L) und dem zweiten Stellmittel (18.R) verbunden ist.
